# EUROPEAN PATENT SPECIFICATION

(11) **EP 4 160 399 B1**
(45) Date of publication and mention of the grant of the patent: **22.01.2025**
(21) Application number: 21832604.9
(22) Date of filing: 26.05.2021
(51) Int. Cl.: G06F 9/445, G06F 9/54, G06F 21/53, G06F 9/455

(54) **METHOD AND APPARATUS FOR RUNNING PROCESS**
VERFAHREN UND VORRICHTUNG ZUR AUSFÜHRUNG EINES PROZESSES
PROCÉDÉ ET APPAREIL D'EXÉCUTION DE PROCESSUS

(30) Priority: 30.06.2020 CN 202010616278
(43) Date of publication of application: 05.04.2023
(73) Proprietor: Shenzhen Yinwang Intelligent Technologies Co., Ltd., Shenzhen, Guangdong 518129 (CN)
(72) Inventor: CUI, Aiguo, Shenzhen, Guangdong 518129 (CN); TAO, Zhe, Shenzhen, Guangdong 518129 (CN); DENG, Liang, Shenzhen, Guangdong 518129 (CN); WANG, Qiangdong, Shenzhen, Guangdong 518129 (CN); TAN, Zhongping, Shenzhen, Guangdong 518129 (CN); CAO, Jianlong, Shenzhen, Guangdong 518129 (CN)
(74) Representative: Maiwald GmbH
(86) International application number: PCT/CN2021/095905
(87) International publication number: WO 2022/001506

(56) References cited:
- EP-A1- 3 637 288
- CN-A- 1 782 993
- CN-A- 103 324 887
- CN-A- 104 102 535
- CN-A- 104 216 862
- CN-A- 110 597 640
- US-A1- 2006 150 203
- US-A1- 2020 097 323
- US-B1- 6 349 355

## Description

### TECHNICAL FIELD

This application relates to the field of computer technologies, and specifically, to a process running method and apparatus.

### BACKGROUND

With development of information technologies and improvement of chip manufacturing technologies, embedded operating system has been widely developed and applied. The embedded operating system is indispensable to the internet of things, automotive electronics, industrial automation, military and aerospace, and other fields that have strict requirements on real-time performance and reliability.

Application (for example, autonomous driving) that has strict requirement on real-time performance and reliability is usually a data-driven application or an application triggered by event frequently occurred. Generally, the application may be referred to as a functional safety application. Both a functional safety application and a non-functional safety application usually depend on an embedded operating system of a monolithic kernel (monolithic kernel). The embedded operating system of the monolithic kernel includes a user mode (user mode) and a kernel mode (kernel mode), which may also be referred to as a user layer and a kernel layer, or a user state and a kernel state. An application is located at the user layer, and a kernel is located at the kernel layer. A privilege level of the kernel layer is higher than that of the user layer. Due to isolation of a privilege layer, a process of the application at the user layer cannot directly access a kernel service by using a function call, but accesses the kernel service after triggering mode switching by using a system call (syscall) to switch from the user layer to the kernel layer.

Because the functional safety application frequently switches from the user layer to the kernel mode, relatively high performance overheads are caused.

EP 3637288 A1 discloses a Secure World access method, apparatus, and system, to improve security of a Secure World. The method includes: creating a first virtual machine in a Normal World; loading a plurality of programs in the Normal World to the first virtual machine, where the plurality of programs include a kernel and at least one user program, the kernel runs in a first-level mode, the at least one user program runs in a second-level mode, and the first level is higher than the second level; when it is determined that a first user program in the at least one user program needs to access a Secure World, creating, in the Normal World, a second virtual machine running in the first-level mode; and stripping the first user program from the first virtual machine, and loading the first user program to the second virtual machine, so that the first user program accesses the Secure World by using the second virtual machine.

US 2006/150203 A1 discloses a subsystem of an operating system operating as a kernel mode component, such as a kernel mode driver, instead of operating as a user mode component.

US 6,349,355 B1 discloses a computer system having a microprocessor that can execute in a non-privileged user mode and a privileged kernel mode. A user virtual address space is used when the microprocessor is in the user mode, and a kernel virtual address space is used when the microprocessor is in the kernel mode. Each of the address spaces has the same range of virtual addresses that is designated for shared components. The user virtual address space is mapped to an offset position within the kernel address space. When a user process calls a kernel function with a pointer argument, the pointer is biased before being dereferenced to account for the offset of the user address space within the kernel address space.

### SUMMARY

Embodiments of this application provide a process running method. When a process of a functional safety application is run, frequent switching from a user layer to a kernel layer can be avoided, so as to reduce performance overheads caused by privilege layer switching. Embodiments of this application further provide a corresponding apparatus. The invention is set out by the appended claims.

According to a first aspect, this application provides a process running method, including: receiving a process startup request, where the process startup request is used to indicate to start a target process; executing an executable file of a target process in a kernel based on the process startup request, to obtain first running function data that supports running of the target process in the kernel; migrating the first running function data to a functional safety partition to obtain second running function data, where the functional safety partition and the kernel are located at a same privilege layer; and running the target process in the functional safety partition based on the second running function data. In a possible implementation, the executable file includes tag information, and the tag information is used to indicate that the target process is a process of a functional safety application.

In the first aspect, the method may be applied to a terminal device or a computer system in the terminal device. The terminal device may be a mobile phone, a vehicle-mounted terminal, a self-driving apparatus (for example, a self-driving car, a self-driving ship, or a self-driving aircraft), or the like. The self-driving apparatus may also be referred to as an intelligent apparatus. For example, the self-driving car may be referred to as an intelligent car. The process may be a process of an application. The process startup request may be a request triggered during system startup, or may be a request triggered when a user uses the application. The process startup request may carry an identifier of the target process, or may carry an identifier of an application corresponding to the target process. In this way, a corresponding executable file may be found by using the identifier of the process or the identifier of the corresponding application. The executable file includes a file header and binary execution code, each process has a corresponding executable file, and a script of the executable file may include an identifier of the process. Executing the executable file of the target process in the kernel means executing the binary execution code of the executable file in an environment of the kernel. The file header of the executable file may include tag information, and the tag information may be a segment of special tag data, which may be a character string or a value. The functional safety partition is also referred to as a data plane environment (data plane environment, DPE). The functional safety partition is configured at a kernel layer. The functional safety partition may be used to run processes of all applications, or may be used to run the process of the functional safety application. The functional safety application is an application (for example, self-driving) that has a strict requirement on real-time performance and reliability, and is usually a data-driven application or an application triggered by a frequent event. Migrating the first running function data to the functional safety partition may be migrating the first running function data to "exclusive" storage space of the functional safety partition. It can be learned from the first aspect that both the functional safety partition and the kernel are located at the kernel layer. In this way, during process running, a service at the kernel layer can be called without switching from a user layer to the kernel layer. This reduces performance overheads caused by privilege layer switching, and improves performance of a processor and a terminal device.

In a possible implementation of the first aspect, a physical resource of the kernel is isolated from a physical resource of the functional safety partition.

In this possible implementation, the physical resource may include a computing resource of a processor or a processor core, a storage resource of a memory, and the like. The kernel corresponds to a first physical resource, and the functional safety partition corresponds to a second physical resource. The kernel does not perceive the second physical resource, that is, a process in the kernel cannot access the second physical resource. Similarly, the functional safety partition does not perceive the first physical resource, that is, a process in the functional safety partition cannot access the first physical resource. Physical resource isolation between the kernel and the functional safety partition ensures that the kernel and the functional safety partition are isolated from each other. In this way, even if an information safety risk occurs in the kernel, the functional safety partition is not affected, so as to ensure safety of data in the functional safety partition. In addition, because the kernel and the functional safety partition are isolated from each other, when code of a functional safety application changes, for example, due to upgrade, the kernel does not need to be modified, so as to improve maintainability of the kernel.

According to the first aspect, the first running function data includes a virtual address of the target process, a mapping relationship between the virtual address and a first physical address, and a context of the target process, and the first physical address is a physical address allocated to the target process in a storage resource of the kernel; and the second running function data includes the virtual address of the target process, a mapping relationship between the virtual address and a second physical address, and the context of the target process, and the second physical address is a physical address allocated to the target process in a storage resource of the functional safety partition.

In this possible implementation, the first running function data and the second running function data are different only in the physical addresses. The first physical address is a physical address of the kernel, and the second physical address is a physical address of the functional safety partition. The first physical address corresponds to the storage resource of the kernel, and the second physical address corresponds to the storage resource of the functional safety partition. The context of the target process includes at least one of a data segment, a heap, a stack, and a register context of the target process. The register context is a value of the target process in a register.

In a possible implementation of the first aspect, the step of migrating the first running function data to a functional safety partition to obtain second running function data includes: triggering a virtual machine manager to migrate the virtual address to the functional safety partition, removing the mapping relationship between the virtual address and the first physical address, and establishing the mapping relationship between the virtual address and the second physical address; and transferring the context of the target process to the functional safety partition by using a shared memory, where the shared memory is a memory shared by the kernel and the functional safety partition.

In this possible implementation, in addition to the kernel layer and the user layer, such an architecture may further include a privilege layer at a higher privilege level. In an ARM architecture, EL0 is usually used to represent the user layer, EL1 is used to represent the kernel layer, and EL2 is used to represent the higher privilege layer. In an X86 architecture, Ring3 is usually used to represent the user layer, Ring2 is used to represent the kernel layer, and Ring1 is used to represent the higher privilege layer. The virtual machine manager is located at the higher privilege layer, for example, the EL2 layer or the Ring1 layer. A higher privileged layer can manage a lower privileged layer. Therefore, the virtual machine manager can manage the kernel and the functional safety partition. After preparing the virtual address, the first physical address, and the mapping relationship between the virtual address and the first physical address for the target process in the kernel, the virtual machine manager may allocate the second physical address to the target process on the storage resource of the functional safety partition, remove the mapping relationship between the virtual address and the first physical address, and establish the mapping relationship between the virtual address and the second physical address, so as to prepare the storage resource for running of the target process in the functional safety partition. In addition, the context of the target process is stored in the kernel, and may be transferred to the functional safety partition by using the shared memory. In this way, the target process can be run in the functional safety partition. In this possible implementation, it can be ensured that the process of the functional safety application is run in the functional safety partition without modifying the kernel, so as to implement ecological compatibility between the functional safety partition and the kernel.

In a possible implementation of the first aspect, the method further includes: when the executable file of the target process is executed in the kernel, creating a first task structure in the kernel, where the first task structure is used to store the context of the target process; adding an indication value to the first task structure, where the indication value indicates that the target process needs to be run in the functional safety partition; when the target process is run, sending a first notification from the kernel to the functional safety partition based on the indication value, where the first notification is used to indicate to create a second task structure in the functional safety partition; and creating the second task structure based on the first notification, and storing the context of the target process in the second task structure. In another possible implementation, the step of adding an indication value to the first task structure, where the indication value indicates that the target process needs to be run in the functional safety partition includes: adding the indication value to the first task structure based on the tag information, where the indication value indicates that the target process is the process of the functional safety application.

In this possible implementation, the first task structure (task struct) is a structure that is in the kernel and that is used to store the context of the target process, and may be in a form of a table, or may be in another form. When the process is started, the first task structure is first created in the kernel. Generally, if the executable file includes the tag information, the indication value is set on an application flag bit (DPE APP) of the first structure. For example, the indication value may be set to "1", or certainly may be set to another value. The indication value indicates that the target process needs to be run in the functional safety partition or the target process is the process of the functional safety application. In this way, when the target process is executed, if the indication value in the first task structure is viewed, it is learned that the target process needs to be run in the functional safety partition, to indicate to create the second task structure in the functional safety partition. In this possible implementation, ecological compatibility between the functional safety partition and the kernel is implemented.

In a possible implementation of the first aspect, the method further includes: reading the context of the target process from the shared memory to the functional safety partition; performing a consistency check on the context of the target process to obtain a first check value; and if the first check value is the same as a second check value, determining that the context of the target process is secure data, where the second check value is a trusted value obtained by performing a consistency check on an initial configuration context of the target process.

In this possible implementation, a consistency check is first performed when the context of the target process enters the functional safety partition, so that safety of the target process can be ensured.

In a possible implementation of the first aspect, the method further includes: if a system call instruction of the functional safety partition is called when the target process is run, storing a context of the system call instruction in the shared memory from the functional safety partition; sending a second notification from the functional safety partition to the kernel, where the second notification is used to indicate that a system call occurs; reading the context of the system call instruction from the shared memory, and calling a system call instruction of the kernel based on the context of the system call instruction to perform a system call, to obtain a return value of the system call; and transferring the return value of the system call to the functional safety partition by using the shared memory.

In this possible implementation, the context of the system call instruction may be transferred between the functional safety partition and the kernel by using the shared memory. In this way, a system call of the functional safety partition can be implemented by using a system call process of the kernel, so as to ensure ecological compatibility between the functional safety partition and the kernel.

In a possible implementation of the first aspect, the method further includes: reading the return value of the system call from the shared memory to the functional safety partition; performing a consistency check on the return value of the system call to obtain a third check value; and if the third check value is the same as a fourth check value, determining that the return value of the system call is secure data, where the fourth check value is a trusted value obtained by performing a consistency check based on an original file corresponding to the system call.

In this possible implementation, when a system call occurs, a consistency check needs to be first performed on the return value returned to the functional safety partition. In this way, safety of the functional safety partition can be ensured.

In a possible implementation of the first aspect, the method further includes: if a page fault occurs when the target process is run, storing a context of the page fault in the shared memory from the functional safety partition; sending a third notification from the functional safety partition to the kernel, where the third notification is used to indicate that a page fault occurs; reading the context of the page fault from the shared memory, calling a page fault processing function in the kernel based on the context of the page fault, and performing page fault processing based on the page fault processing function, to obtain a processing result; and transferring the processing result to the functional safety partition by using the shared memory.

In this possible implementation, when a page fault occurs, the context of the page fault may be transferred between the functional safety partition and the kernel. In this way, a page fault of the functional safety partition can be implemented by using a page fault processing process of the kernel, so as to ensure ecological compatibility between the functional safety partition and the kernel.

In a possible implementation of the first aspect, the performing page fault processing based on the page fault processing function includes: executing the page fault processing function to allocate a physical page to the target process, and configuring a page table of the physical page; triggering the virtual machine manager to establish a mapping relationship between the virtual address and a third physical address, where the third physical address is obtained after an address of the physical page is added to the first physical address; and modifying a page table permission value of the target process based on the page table of the physical page, where the page table permission value is used to indicate a range of page tables allowed to be used by the target process.

In this possible implementation, when a page fault occurs, the virtual machine manager adds a physical page to the storage resource corresponding to the functional safety partition, and modifies the page table. This can also ensure that the target process is run normally after the page fault occurs.

In a possible implementation of the first aspect, the target process includes a thread and a coroutine, the thread is created in the kernel and is run in the functional safety partition, and the coroutine is created in the functional safety partition and is run in the functional safety partition; and the functional safety partition includes a unified scheduler, and the unified scheduler is configured to schedule the thread and the coroutine in a unified manner.

In this possible implementation, the coroutine is a microthread. In the conventional technology, a thread scheduler is used to schedule a thread, and a coroutine scheduler is used to schedule a coroutine. When a coroutine needs to be scheduled, the coroutine needs to be first switched to a thread in which the coroutine is located, and then the thread is switched to the coroutine for scheduling. Two-level switching needs to be performed, and overheads are relatively high. In addition, the kernel is heavily interfered with, and scheduling determinism cannot be ensured. However, in this possible implementation, through unified scheduling of the unified scheduler, two-level scheduling is avoided, and overheads are reduced. In addition, the unified scheduler is located in the functional safety partition, and is not interfered with, and scheduling determinism is ensured.

According to a second aspect, this application provides a process running method. The method is applied to a computer system, and the computer system includes a first processing apparatus and a second processing apparatus. The method includes: The first processing apparatus receives a process startup request, where the process startup request is used to indicate to start a target process. The first processing apparatus executes an executable file of a target process in a kernel based on the process startup request, to obtain first running function data that supports running of the target process in the kernel. The first processing apparatus migrates the first running function data to a functional safety partition to obtain second running function data, where the functional safety partition and the kernel are located at a same privilege layer, and the second function data is used to run the target process in the functional safety partition. In a possible implementation, the executable file includes tag information, and the tag information is used to indicate that the target process is a process of a functional safety application.

In the second aspect, the first processing apparatus and the second processing apparatus may be two processors, or may be two processor cores. Other content is the same as that in the first aspect. For other content, refer to the corresponding descriptions in the first aspect.

In a possible implementation of the second aspect, a physical resource of the kernel is isolated from a physical resource of the functional safety partition.

According to the second aspect, the first running function data includes a virtual address of the target process, a mapping relationship between the virtual address and a first physical address, and a context of the target process, and the first physical address is a physical address allocated to the target process in a storage resource of the kernel; and the second running function data includes the virtual address of the target process, a mapping relationship between the virtual address and a second physical address, and the context of the target process, and the second physical address is a physical address allocated to the target process in a storage resource of the functional safety partition.

In a possible implementation of the second aspect, the step of migrating the first running function data to a functional safety partition to obtain second running function data includes: The first processing apparatus triggers a virtual machine manager to migrate the virtual address to the functional safety partition, removes the mapping relationship between the virtual address and the first physical address, and establishes the mapping relationship between the virtual address and the second physical address. The first processing apparatus transfers the context of the target process to the functional safety partition by using a shared memory, where the shared memory is a memory shared by the kernel and the functional safety partition.

In a possible implementation of the second aspect, the method further includes: When executing the executable file of the target process in the kernel, the first processing apparatus creates a first task structure in the kernel, where the first task structure is used to store the context of the target process; adds an indication value to the first task structure, where the indication value indicates that the target process needs to be run in the functional safety partition; and when the target process is run, sends a first notification from the kernel to the functional safety partition based on the indication value, where the first notification is used to indicate to create a second task structure in the functional safety partition. In another possible implementation, the step of adding an indication value to the first task structure, where the indication value indicates that the target process needs to be run in the functional safety partition includes: adding the indication value to the first task structure based on the tag information, where the indication value indicates that the target process is the process of the functional safety application.

In a possible implementation of the second aspect, the method further includes: The first processing apparatus receives a second notification sent by the second processing apparatus, where the second notification is used to indicate that a system call occurs; reads a context of a system call instruction from the shared memory, and calls a system call instruction of the kernel based on the context of the system call instruction to perform a system call, to obtain a return value of the system call; and transfers the return value of the system call to the functional safety partition by using the shared memory.

In a possible implementation of the second aspect, the method further includes: The first processing apparatus receives a third notification sent by the second processing apparatus, where the third notification is used to indicate that a page fault occurs; reads a context of the page fault from the shared memory, calls a page fault processing function in the kernel based on the context of the page fault, and performs page fault processing based on the page fault processing function, to obtain a processing result; and transfers the processing result to the functional safety partition by using the shared memory.

In a possible implementation of the second aspect, the step of performing page fault processing based on the page fault processing function includes: The first processing apparatus executes the page fault processing function to allocate a physical page to the target process, and configures a page table of the physical page; triggers the virtual machine manager to establish a mapping relationship between the virtual address and a third physical address, where the third physical address is obtained after an address of the physical page is added to the first physical address; and modifies a page table permission value of the target process based on the page table of the physical page, where the page table permission value is used to indicate a range of page tables allowed to be used by the target process.

In a possible implementation of the second aspect, the target process includes a thread and a coroutine, the thread is created in the kernel and is run in the functional safety partition, and the coroutine is created in the functional safety partition and is run in the functional safety partition; and the functional safety partition includes a unified scheduler, and the unified scheduler is configured to schedule the thread and the coroutine in a unified manner.

According to a third aspect, this application provides a process running method. The method is applied to a computer system, and the computer system includes a first processing apparatus and a second processing apparatus. The method includes: The second processing apparatus obtains second running function data, where the second running function data is obtained by the first processing apparatus by migrating first running function data to a functional safety partition, the first running function data is data that is obtained by the first processing apparatus by executing an executable file of a target process in a kernel and that supports running of the target process in the kernel, and the functional safety partition and the kernel are located at a same privilege layer; and runs the target process in the functional safety partition based on the second running function data.

In the third aspect, the first processing apparatus and the second processing apparatus may be two processors, or may be two processor cores. Other content is the same as that in the first aspect. For other content, refer to the corresponding descriptions in the first aspect.

In a possible implementation of the second aspect, a physical resource of the kernel is isolated from a physical resource of the functional safety partition.

According to the third aspect, the first running function data includes a virtual address of the target process, a mapping relationship between the virtual address and a first physical address, and a context of the target process, and the first physical address is a physical address allocated to the target process in a storage resource of the kernel; and the second running function data includes the virtual address of the target process, a mapping relationship between the virtual address and a second physical address, and the context of the target process, and the second physical address is a physical address allocated to the target process in a storage resource of the functional safety partition.

In a possible implementation of the third aspect, the method further includes: The second processing apparatus receives a first notification sent by the first processing apparatus, where the first notification is used to indicate to create a second task structure in the functional safety partition; and creates the second task structure based on the first notification, and stores the context of the target process in the second task structure.

In a possible implementation of the third aspect, the method further includes: The second processing apparatus reads the context of the target process from the shared memory to the functional safety partition; performs a consistency check on the context of the target process to obtain a first check value; and if the first check value is the same as a second check value, determines that the context of the target process is secure data, where the second check value is a trusted value obtained by performing a consistency check on an initial configuration context of the target process. In a possible implementation of the third aspect, the method further includes: if a system call instruction of the functional safety partition is called when the target process is run, storing a context of the system call instruction in the shared memory from the functional safety partition; sending a second notification from the functional safety partition to the kernel, where the second notification is used to indicate that a system call occurs, where the context of the system call instruction is used by the first processing apparatus to read the context of the system call instruction from the shared memory, and call a system call instruction of the kernel based on the context of the system call instruction to perform a system call, to obtain a return value of the system call; and transferring the return value of the system call to the functional safety partition by using the shared memory.

In a possible implementation of the third aspect, the method further includes: The second processing apparatus reads the return value of the system call from the shared memory to the functional safety partition; performs a consistency check on the return value of the system call to obtain a third check value; and if the third check value is the same as a fourth check value, determines that the return value of the system call is secure data, where the fourth check value is a trusted value obtained by performing a consistency check based on an original file corresponding to the system call. In a possible implementation of the third aspect, the method further includes: If a page fault occurs when the target process is run, the second processing apparatus stores a context of the page fault in the shared memory from the functional safety partition; sends a third notification from the functional safety partition to the kernel, where the third notification is used to indicate that a page fault occurs, where the context of the page fault is used by the first processing apparatus to read the context of the page fault from the shared memory, call a page fault processing function in the kernel based on the context of the page fault, and perform page fault processing based on the page fault processing function, to obtain a processing result; and transfers the processing result to the functional safety partition by using the shared memory.

In a possible implementation of the third aspect, the target process includes a thread and a coroutine, the thread is created in the kernel and is run in the functional safety partition, and the coroutine is created in the functional safety partition and is run in the functional safety partition; and the functional safety partition includes a unified scheduler, and the unified scheduler is configured to schedule the thread and the coroutine in a unified manner.

According to a fourth aspect, this application provides a process running apparatus. The process running apparatus has a function of implementing the method in any one of the first aspect or the possible implementations of the first aspect. The function may be implemented by hardware, or may be implemented by hardware executing corresponding software. The hardware or software includes one or more modules corresponding to the foregoing function, for example, a receiving unit, a sending unit, a first processing unit, a second processing unit, and a third processing unit. The first processing unit, the second processing unit, and the third processing unit may alternatively be implemented by one processing unit or two processing units.

According to a fifth aspect, this application provides a processing apparatus. The processing apparatus has a function of implementing the method in any one of the second aspect or the possible implementations of the second aspect. The function may be implemented by hardware, or may be implemented by hardware executing corresponding software. The hardware or software includes one or more modules corresponding to the foregoing function, for example, a receiving unit, a sending unit, a first processing unit, and a second processing unit. The first processing unit and the second processing unit may alternatively be implemented by one processing unit.

According to a sixth aspect, this application provides a processing apparatus. The processing apparatus has a function of implementing the method in any one of the third aspect or the possible implementations of the third aspect. The function may be implemented by hardware, or may be implemented by hardware executing corresponding software. The hardware or software includes one or more modules corresponding to the foregoing function, for example, a receiving unit, a sending unit, a first processing unit, and a second processing unit. The first processing unit and the second processing unit may alternatively be implemented by one processing unit.

According to a seventh aspect, this application provides a computer device. The computer device may be a terminal device. The computer device includes at least one processor, a memory, an input/output (input/output, I/O) interface, and computer-executable instructions that are stored in the memory and that can be run on the processor. When the computer-executable instructions are executed by the processor, the processor performs the method in any one of the first aspect or the possible implementations of the first aspect.

According to an eighth aspect, this application provides a computer device. The computer device may be a terminal device. The computer device includes at least one processor, a memory, an input/output (input/output, I/O) interface, and computer-executable instructions that are stored in the memory and that can be run on the processor. When the computer-executable instructions are executed by the processor, the processor performs the method in any one of the second aspect or the possible implementations of the second aspect.

According to a ninth aspect, this application provides a computer device. The computer device may be a terminal device. The computer device includes at least one processor, a memory, an input/output (input/output, I/O) interface, and computer-executable instructions that are stored in the memory and that can be run on the processor. When the computer-executable instructions are executed by the processor, the processor performs the method in any one of the third aspect or the possible implementations of the third aspect.

According to a tenth aspect, this application provides a computer-readable storage medium storing one or more computer-executable instructions. When the computer-executable instructions are executed by a processor, the processor performs the method in any one of the first aspect or the possible implementations of the first aspect.

According to an eleventh aspect, this application provides a computer-readable storage medium storing one or more computer-executable instructions. When the computer-executable instructions are executed by a processor, the processor performs the method in any one of the second aspect or the possible implementations of the second aspect. According to a twelfth aspect, this application provides a computer-readable storage medium storing one or more computer-executable instructions. When the computer-executable instructions are executed by a processor, the processor performs the method in any one of the third aspect or the possible implementations of the third aspect. According to a thirteenth aspect, this application provides a computer program product storing one or more computer-executable instructions. When the computer-executable instructions are executed by a processor, the processor performs the method in any one of the first aspect or the possible implementations of the first aspect.

According to a fourteenth aspect, this application provides a computer program product storing one or more computer-executable instructions. When the computer-executable instructions are executed by a processor, the processor performs the method in any one of the second aspect or the possible implementations of the second aspect. According to a fifteenth aspect, this application provides a computer program product storing one or more computer-executable instructions. When the computer-executable instructions are executed by a processor, the processor performs the method in any one of the third aspect or the possible implementations of the third aspect.

According to a sixteenth aspect, this application provides a chip system. The chip system includes a processor, configured to support a process running apparatus to implement the function in any one of the first aspect or the possible implementations of the first aspect. In a possible design, the chip system may further include a memory. The memory is configured to store program instructions and data that are necessary for the process running apparatus. The chip system may include a chip, or may include a chip and another discrete component.

According to a seventeenth aspect, this application provides a chip system. The chip system includes a processor, configured to support a process running apparatus to implement the function in any one of the second aspect or the possible implementations of the second aspect. In a possible design, the chip system may further include a memory. The memory is configured to store program instructions and data that are necessary for the process running apparatus. The chip system may include a chip, or may include a chip and another discrete component.

According to an eighteenth aspect, this application provides a chip system. The chip system includes a processor, configured to support a process running apparatus to implement the function in any one of the third aspect or the possible implementations of the third aspect. In a possible design, the chip system may further include a memory. The memory is configured to store program instructions and data that are necessary for the process running apparatus. The chip system may include a chip, or may include a chip and another discrete component.

For technical effects brought by any one of the fourth aspect to the eighteenth aspect or the possible implementations of the fourth aspect to the eighteenth aspect, refer to the technical effects brought by the first aspect or the different possible implementations of the first aspect. Details are not described herein again.

In embodiments of this application, both the functional safety partition and the kernel are located at the kernel layer, and the process of the functional safety application is run in the functional safety partition. In this way, when the process of the functional safety application is run, the service at the kernel layer can be called without switching from the user layer to the kernel layer. This reduces performance overheads caused by privilege layer switching, and improves performance of the processor and the terminal device.

### BRIEF DESCRIPTION OF DRAWINGS

FIG. 1 is a schematic diagram of a system architecture of a terminal device according to an embodiment of this application;
FIG. 2 is a schematic diagram of an architecture of a self-driving apparatus according to an embodiment of this application;
FIG. 3 is a schematic diagram of an embodiment of a process running method according to an embodiment of this application;
FIG. 4 is a schematic diagram of another embodiment of a process running method according to an embodiment of this application;
FIG. 5 is a schematic diagram of another embodiment of a process running method according to an embodiment of this application;
FIG. 6A is a schematic diagram of another embodiment of a process running method according to an embodiment of this application;
FIG. 6B is a schematic diagram of another embodiment of a process running method according to an embodiment of this application;
FIG. 7 is a schematic diagram of another embodiment of a process running method according to an embodiment of this application;
FIG. 8 is a schematic diagram of a scenario according to an embodiment of this application;
FIG. 9 is a schematic diagram of an embodiment of a process running apparatus according to an embodiment of this application;
FIG. 10 is a schematic diagram of a structure of a computer device according to an embodiment of this application; and
FIG. 11 is a schematic diagram of another structure of a computer device according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to a similar technical problem.

In the specification, claims, and accompanying drawings of this application, the terms such as "first" and "second" are intended to distinguish between similar objects but do not necessarily indicate a specific order or sequence. It should be understood that data used in such a way are interchangeable in proper circumstances, so that embodiments described herein can be implemented in other orders than the order illustrated or described herein. In addition, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide an application running method, so as to avoid frequent switching from a user layer to a kernel layer, thereby reducing performance overheads caused by privilege layer switching. Embodiments of this application further provide a corresponding apparatus. Details are separately described below.

To facilitate understanding of embodiments of this application, the following describes some terms used in embodiments of this application.

An executable file is a static concept. The executable file is a file on some precompiled instructions and data sets. The executable file includes a file header and binary execution code, each process has a corresponding executable file, and a script of the executable file may include an identifier of the process.

A process is a dynamic concept. The process is a running activity of a program in a computer about a data set, and is a basic unit for resource allocation and scheduling in a system.

A kernel is a most basic part of an operating system. The kernel is a part of software that provides many applications with secure access to computer hardware. The kernel may be a Linux kernel.

A functional safety partition is also referred to as a data plane environment (data plane environment, DPE). The functional safety partition is configured at a kernel layer, and is located at a same privilege layer as a kernel. The functional safety partition may be used to run processes of all applications, or may be used to run a process of a functional safety application.

The functional safety application is an application (for example, self-driving) that has a strict requirement on real-time performance and reliability, and is usually a data-driven application or an application triggered by a frequent event. Running function data is data that supports running of a process, and includes a virtual address of the process, a mapping relationship between the virtual address and a physical address, and a context of the process.

A virtual address is also referred to as a logical address, and is usually represented by an offset. If logical space shared by all processes in an operating system is described as the entire virtual address space, the entire virtual address space has a start value, and virtual address space that can be used by a target process may be determined by using the start value and the offset.

A physical address is an address of a corresponding storage resource, and the physical address may also be represented by an offset.

A context of a process includes at least one of a data segment (data segment), a heap (heap), a stack (stack), and a register context of the process.

A register context is a value written to a register during process running.

A task structure (task _struct) is a structure used to store a context of a process, and may be in a form of a table, or may be in another form.

System call (system call): Main functions of an operating system are to manage hardware resources and provide a good environment for an application developer to make an application have better compatibility. To achieve these objectives, a kernel provides a series of multi-kernel functions with preset functions, which are presented to a user through a group of interfaces referred to as system calls. The system call is used to send a request of the application to the kernel, call a corresponding kernel function to complete required processing, and return a processing result to the application.

A page fault is an exception caused by the page fault.

A consistency check method may be a cyclic redundancy check (cyclic redundancy check, CRC). The CRC is a common check method with an error detection capability and an error correction capability.

A process running method provided in embodiments of this application may be applied to a terminal device or a computer system in the terminal device. The terminal device (which may also be referred to as user equipment (user equipment, UE)) is a device having wireless receiving and sending functions, and may be deployed on land, for example, an indoor or outdoor device, a handheld device, or a vehicle-mounted device, or may be deployed on water (for example, on a steamship), or may be deployed in the air (for example, on an airplane, a balloon, or a satellite). The terminal may be a mobile phone (mobile phone), a tablet computer (pad), a computer having wireless receiving and sending functions, a virtual reality (virtual reality, VR) terminal, an augmented reality (augmented reality, AR) terminal, a wireless terminal in industrial control (industrial control), a wireless terminal in self-driving (self-driving), a self-driving apparatus, a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like.

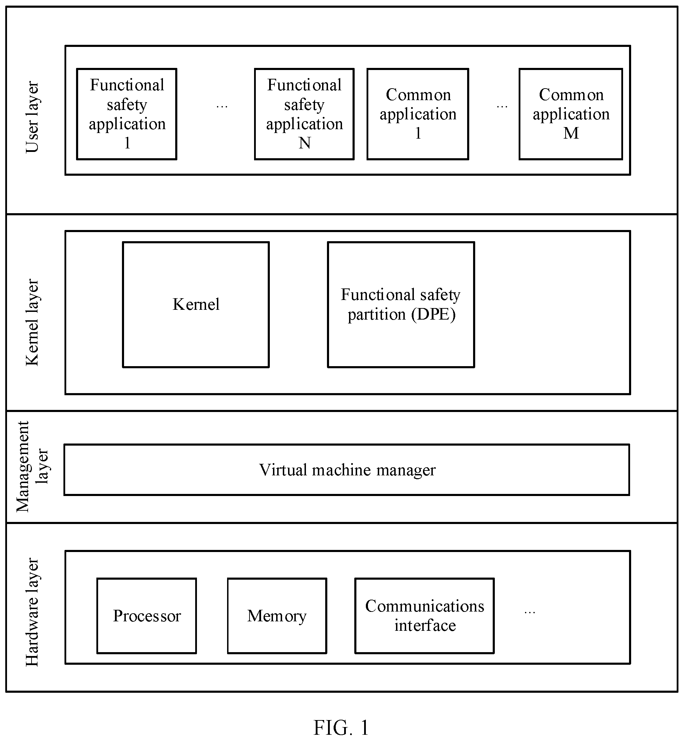

The terminal device may be understood with reference to the system architecture shown in FIG. 1. As shown in FIG. 1, the terminal device includes a user layer, a kernel layer, a management layer, and a hardware layer.

There may be a plurality of applications (application, APP) at the user layer. The plurality of applications may include a functional safety application and a common application. The common application is relative to the functional safety application. An application other than the functional safety application may be referred to as the common application. The kernel layer includes a kernel and a functional safety partition. A process of the common application is run in the kernel, and a process of the functional safety application is run in the functional safety partition. To ensure ecological compatibility between the functional safety partition and the kernel, interaction may be performed between the functional safety partition and the kernel, and the kernel assists in completing operations of some functional safety applications.

The management layer may include a virtual machine manager. A privilege of the virtual machine manager is higher than privileges of the kernel layer and the user layer, and the virtual machine manager may manage the kernel layer, for example, configure running function data of the process of the functional safety application to the functional safety partition.

In different architectures, names of the user layer, the kernel layer, and the management layer may be slightly different. For example, in an ARM architecture, EL0 is usually used to represent the user layer, EL1 is used to represent the kernel layer, and EL2 is used to represent the higher privilege layer. In an X86 architecture, Ring3 is usually used to represent the user layer, Ring2 is used to represent the kernel layer, and Ring1 is used to represent the higher privilege layer.

The hardware layer includes resources such as a computing unit, a memory, and a communications interface. The hardware layer is used to provide hardware resources for the user layer, the kernel layer, and the management layer to work normally.

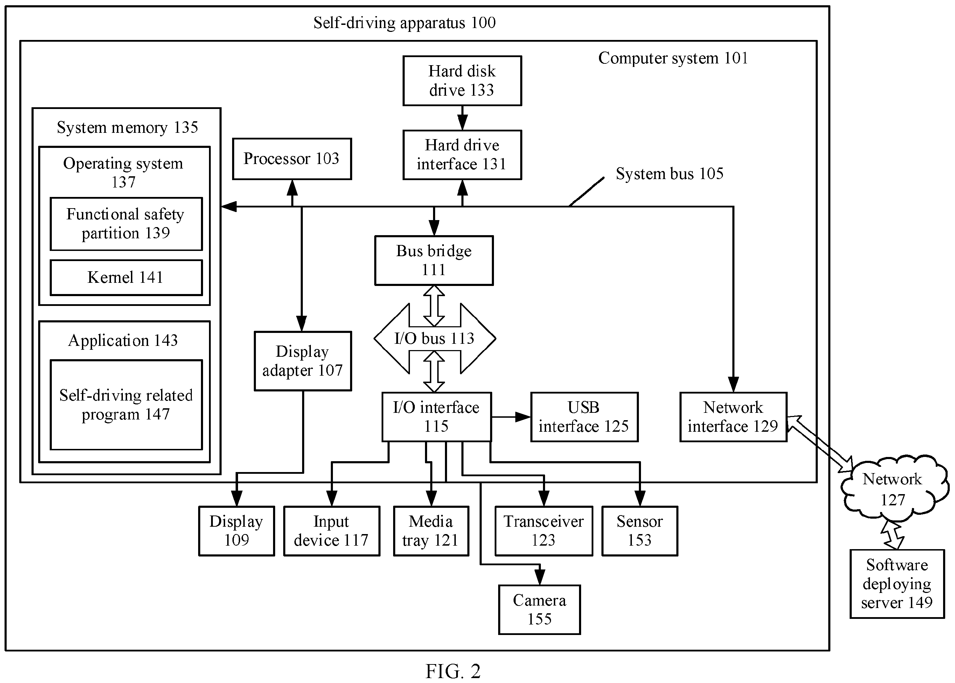

If the terminal device is a self-driving apparatus, the hardware layer may further include hardware such as a radar and a camera. Because a relatively large quantity of functional safety applications are involved in the self-driving field, the following describes a form in which this application is applied to a self-driving apparatus 100 with reference to FIG. 2.

As shown in FIG. 2, the self-driving apparatus 100 includes a computer system 101, a display 109, an input device 117, a media tray (media tray) 121, a transceiver 123 (which may send and/or receive a radio communication signal), a sensor 153, and a camera 155. The computer system 101 includes a processor 103, and the processor 103 is coupled to a system bus 105. The processor 103 may be one or more processors, and each processor may include one or more processor cores. The computer system 101 further includes a display adapter (video adapter) 107, the display adapter 107 may drive the display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, the input device 117 (such as a keyboard, a mouse, or a touchscreen), the media tray 121 such as a CD-ROM or a multimedia interface, a transceiver 123, the camera 155 (which can capture static and dynamic digital video images), and an external USB interface 125. Optionally, an interface connected to the I/O interface 115 may be a USB interface.

The processor 103 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 103 may be a neural-network processing unit (neural-network processing unit, NPU) or a combination of the neural-network processing unit and the conventional processor. Optionally, a neural-network processing unit is mounted on the processor 103.

The computer system 101 may communicate with a software deploying server 149 through a network interface 129. The network interface 129 is a hardware network interface such as a network adapter. A network 127 may be an external network such as the internet, or may be an internal network such as the Ethernet or a virtual private network (VPN). Optionally, the network 127 may alternatively be a wireless network such as a Wi-Fi network or a cellular network.

A hard drive interface is coupled to the system bus 105. A hardware drive interface is connected to a hard disk drive. A system memory 135 is coupled to the system bus 105. Data running in the system memory 135 may include an operating system 137 and an application 143.

The operating system 137 includes a functional safety partition (DPE) 139 and a kernel (kernel) 141.

The kernel 141 includes parts in the operating system that are configured to manage a memory, a file, a peripheral device, and a system resource. When directly interacting with hardware, the kernel of the operating system usually runs a process, provides inter-process communication, and provides CPU time slice management, interrupt, memory management, I/O management, and the like.

The application 143 includes a self-driving related program 147, for example, a localization program, a planning program, and a perception program. Applications corresponding to these programs are all functional safety applications. The application 143 may exist on a system of the software deploying server (deploying server) 149. In an embodiment, when the application 143 needs to be executed, the computer system 101 may download the application 143 from the software deploying server 149.

The sensor 153 is associated with the computer system 101. The sensor 153 is configured to detect an ambient environment of the computer system 101. For example, the sensor 153 may detect an animal, a car, an obstacle, and a crosswalk. Further, the sensor may detect ambient environments of objects such as the animal, the car, the obstacle, and the crosswalk, for example, the ambient environment of the animal, such as another animal that appears around the animal, a weather condition, and brightness of the ambient environment. Optionally, if the computer system 101 is located on the self-driving apparatus, the sensor may be a camera, an infrared sensor, a chemical detector, a microphone, or the like. When being activated, the sensor 153 senses information at preset intervals, and provides the sensed information for the computer system 101 in real time or near real time.

The computer system 101 is configured to: determine a driving status of the self-driving apparatus based on sensor data collected by the sensor 153; determine, based on the driving status and a current driving task, a driving operation that needs to be executed by the self-driving apparatus; and send a control instruction corresponding to the driving operation to a control system. The driving status of the self-driving apparatus may include a driving situation of the self-driving apparatus, for example, a head direction, a speed, a location, and an acceleration, and may also include a status of an ambient environment of the self-driving apparatus, for example, a location of an obstacle, a location and a speed of another vehicle, a location of a crosswalk, or a signal of a traffic light. The computer system 101 may include a task abstraction network and a shared policy network that are implemented by the processor 103. Specifically, the processor 103 determines a current self-driving task. The processor 103 inputs at least one group of historical paths of the self-driving task to the task abstraction network for feature extraction, to obtain a task feature vector representing a feature of the self-driving task. The processor 103 determines, based on the sensor data collected by the sensor 153, a status vector representing a current driving status of the self-driving apparatus. The processor 103 inputs the task feature vector and the status vector into the shared policy network for processing, to obtain a driving operation that needs to be performed currently by the self-driving apparatus. The processor 103 performs the driving operation through the control system. The processor 103 repeats the foregoing steps of determining and performing the driving operation, until the self-driving task is completed.

The self-driving apparatus 100 may be a car, a truck, a motorcycle, a bus, a boat, an airplane, a helicopter, a lawn mower, a recreational vehicle, a playground self-driving apparatus, a construction device, a tram, a golf cart, a train, a handcart, or the like. This is not specifically limited in this embodiment of this application.

Regardless of whether the foregoing terminal device is a self-driving apparatus or another device, a kernel layer of the operating system includes the foregoing functional safety partition.

The following describes, with reference to the accompanying drawings, a process running method performed by a process running apparatus provided in embodiments of this application. The process running apparatus may be a processor system. The processor system includes one or more processors, for example, the processor 103 in FIG. 2. The process running apparatus may manage a kernel and a functional safety partition.

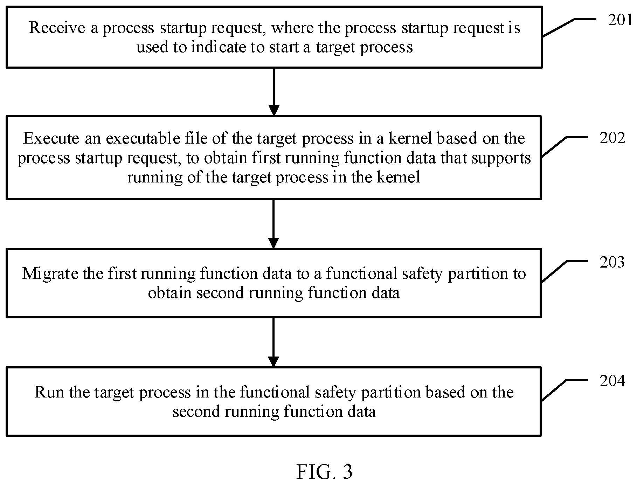

As shown in FIG. 3, an embodiment of the process running method provided in embodiments of this application includes the following steps.

201: Receive a process startup request, where the process startup request is used to indicate to start a target process. The process startup request may be a request triggered during system startup, or may be a request triggered when a user uses an application.

202: Execute an executable file of the target process in a kernel based on the process startup request, to obtain first running function data that supports running of the target process in the kernel.

The process startup request may carry an identifier of the target process, or may carry an identifier of an application corresponding to the target process. In this way, a corresponding executable file may be found by using the identifier of the process or the identifier of the corresponding application.

The executable file includes a file header and binary execution code, each process has a corresponding executable file, and a script of the executable file may include an identifier of the process. Executing the executable file of the target process in the kernel means executing the binary execution code of the executable file in an environment of the kernel. The file header of the executable file may include tag information, and the tag information may be a segment of special tag data, which may be a character string or a value.

The first running function data includes a virtual address of the target process, a mapping relationship between the virtual address and a first physical address, and a context of the target process, and the first physical address is a physical address allocated to the target process in a storage resource of the kernel.

203: Migrate the first running function data to a functional safety partition to obtain second running function data. The tag information is used to indicate that the target process is a process of a functional safety application, and the functional safety partition and the kernel are located at a same privilege layer.

The second running function data includes the virtual address of the target process, a mapping relationship between the virtual address and a second physical address, and the context of the target process, and the second physical address is a physical address allocated to the target process in a storage resource of the functional safety partition.

In a possible implementation, the executable file includes the tag information, and if the executable file includes the tag information, the first running function data is migrated to the functional safety partition to obtain the second running function data. The tag information is used to indicate that the target process is the process of the functional safety application.

Migrating the first running function data to the functional safety partition may be migrating the first running function data to "exclusive" storage space of the functional safety partition.

204: Run the target process in the functional safety partition based on the second running function data.

In this embodiment of this application, both the functional safety partition and the kernel are located at the kernel layer. In this way, during process running, a service at the kernel layer can be called without switching from a user layer to the kernel layer. This reduces performance overheads caused by privilege layer switching, and improves performance of a processor and a terminal device.

Optionally, in this embodiment of this application, a physical resource of the kernel is isolated from a physical resource of the functional safety partition. In the physical resource isolation process, different physical resources may be separately configured for the kernel and the functional safety partition during initialization of a virtual machine manager, so as to implement physical resource isolation between the kernel and the functional safety partition. The physical resource may include a computing resource of a processor or a processor core, a storage resource of a memory, and the like. The kernel corresponds to a first physical resource, and the functional safety partition corresponds to a second physical resource. The kernel does not perceive the second physical resource, that is, a process in the kernel cannot access the second physical resource. Similarly, the functional safety partition does not perceive the first physical resource, that is, a process in the functional safety partition cannot access the first physical resource. Physical resource isolation between the kernel and the functional safety partition ensures that the kernel and the functional safety partition are isolated from each other. In this way, even if an information safety risk occurs in the kernel, the functional safety partition is not affected, so as to ensure safety of data in the functional safety partition. In addition, because the kernel and the functional safety partition are isolated from each other, when code of a functional safety application changes, for example, due to upgrade, the kernel does not need to be modified, so as to improve maintainability of the kernel.

The process running method provided in this embodiment of this application may include the following three aspects: 1. Start the target process in the kernel. 2. Migrate the running function data of the target process to the functional safety partition. 3. Run the target process in the functional safety partition. Description is separately provided below.

1. Start the target process in the kernel.

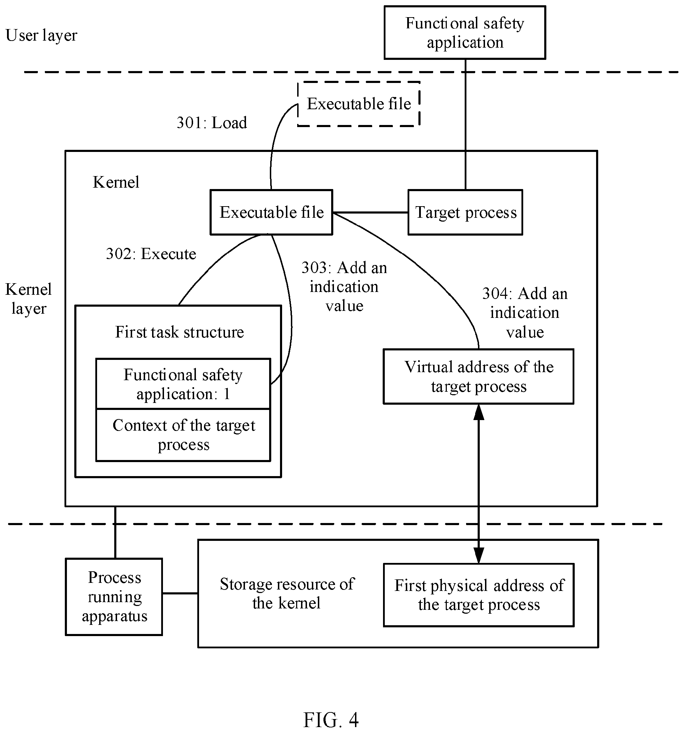

A process of starting the target process in the kernel may be understood with reference to FIG. 4. As shown in FIG. 4, the process includes the following steps.

301: When an operating system is started, or when a target application corresponding to the target process is triggered, the process running apparatus loads the executable file of the target process based on the identifier of the target process and the identifier of the process included in the script of the executable file.

The executable file of the target process may be loaded to a memory corresponding to the kernel.

302: In a process of executing the executable file of the target process, the process running apparatus creates a first task structure (task_struct) in the kernel.

The first task structure is used to store the context of the target process. The first task structure (task struct) is a structure that is in the kernel and that is used to store the context of the target process, and may be in a form of a table, or may be in another form.

303: If the file header of the executable file includes the tag information, the process running apparatus adds an indication value to the first task structure based on the tag information, where the indication value indicates that the target process is the process of the functional safety application.

The indication value may be added to a flag bit of the functional safety application (DPE APP) in the first task structure. The indication value may be "1", or may be another value. A specific value of the indication value is not limited in this application.

As shown in FIG. 4, the first task structure is created in the kernel. When the value of the flag bit of the functional safety application in the task structure is "1", it indicates that the target process is the process of the functional safety application. In addition, the first task structure further stores the context of the target process.

304: In a process of executing the executable file of the target process, the process running apparatus further allocates the virtual address from virtual address space to the target process, allocates the first physical address from the storage

resource of the kernel to the target process, and establishes the mapping relationship between the virtual address and the first physical address.

In this way, if the target process is run in the kernel, the virtual address space indicated by the virtual address and physical address space indicated by the first physical address may be used, and a related operation such as addition, deletion, modification, or query related to the target process may be performed by using the corresponding virtual address space and the corresponding physical address space of the target process.

In this embodiment, the context of the target process may be transferred to the functional safety partition by using a shared memory. In this way, the target process can be run in the functional safety partition. It can be ensured that the process of the functional safety application is run in the functional safety partition without modifying the kernel, so as to implement ecological compatibility between the functional safety partition and the kernel. In addition, a consistency check may be further performed on the context of the target process in the functional safety partition, so as to further ensure safety of the target process during initialization of the functional safety partition.

2. Migrate the running function data of the target process to the functional safety partition.

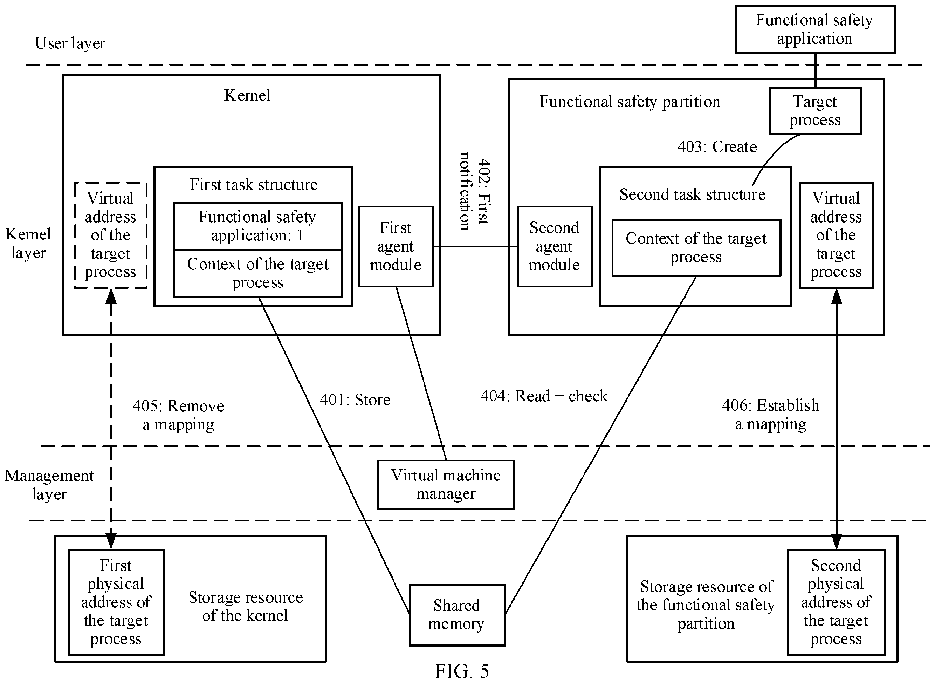

A process of migrating the running function data may be understood with reference to FIG. 5. As shown in FIG. 5, the process includes the following steps.

Because the physical resource of the kernel is isolated from the physical resource of the functional safety partition, the shared memory needs to be used in the process of migrating the running function data. A first agent module may be configured in the kernel, and a second agent module may be configured in the functional safety partition. The first agent module and the second agent module may be implemented by software. The processor system may implement an agent function of the first agent module in the kernel and an agent function of the second agent module in the functional safety partition by executing corresponding software.

401: When the target process is run, store the context of the target process in the shared memory based on the indication value.

402: Send a first notification from the kernel to the functional safety partition, where the first notification is used to indicate to create a second task structure in the functional safety partition.

The notification between the kernel and the functional safety partition may be sent by using the first agent module and the second agent module. As shown in FIG. 5, the first agent module sends the first notification to the second agent module.

403: Create the second task structure based on the first notification.

404: Read the context of the target process from the shared memory; perform a consistency check on the context of the target process to obtain a first check value; and if the first check value is the same as a second check value, store the context of the target process in the second task structure.

If the first check value is the same as the second check value, it is determined that the context of the target process is secure data. The second check value is a trusted value obtained by performing a consistency check on an initial configuration context of the target process.

405: The first agent module triggers a virtual machine manager to migrate the virtual address to the functional safety partition, and remove the mapping relationship between the virtual address and the first physical address.

406: The first agent module triggers the virtual machine manager to establish the mapping relationship between the virtual address and the second physical address.

3. Run the target process in the functional safety partition.

A process of running the target process in the functional safety partition may include a system call processing process and a page fault processing process. Description is separately provided below.

### (1) System call processing process

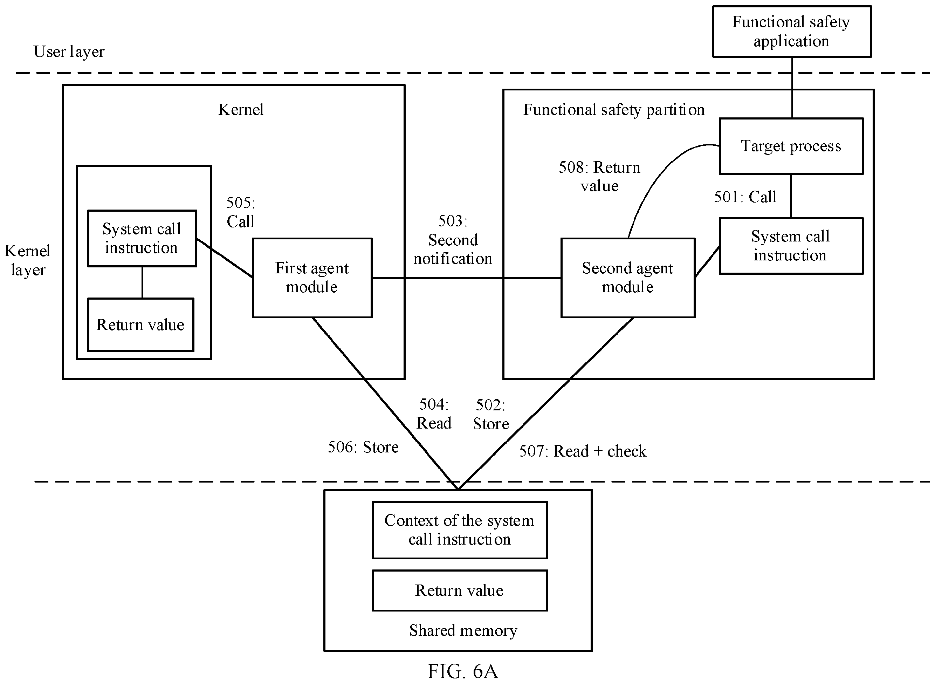

The system call processing process may be understood with reference to FIG. 6A. As shown in FIG. 6A, the process may include the following steps.

501: The second agent module runs the target process in the functional safety partition, and calls a system call instruction of the functional safety partition.

502: The second agent module stores a context of the system call instruction in the shared memory from the functional safety partition.

This step may be storing the context of the system call instruction in the shared memory by using the second agent module.

503: The second agent module sends a second notification from the functional safety partition to the kernel, where the second notification is used to indicate that a system call occurs.

504: The first agent module reads the context of the system call instruction from the shared memory.

505: The first agent module calls a system call instruction of the kernel based on the context of the system call instruction to perform a system call, to obtain a return value of the system call.

506: The first agent module places the return value in the shared memory.

507: The second agent module reads the return value of the system call from the shared memory to the functional safety partition; performs a consistency check on the return value of the system call to obtain a third check value; and if the third check value is the same as a fourth check value, determines that the return value of the system call is secure data, where the fourth check value is a trusted value obtained by performing a consistency check based on an original file corresponding to the system call.

508: The second agent module uses the return value to complete the system call process of the functional safety partition.

In this embodiment, the context of the system call instruction may be transferred between the functional safety partition and the kernel by using the shared memory. In this way, a system call of the functional safety partition can be implemented by using a system call process of the kernel, so as to ensure ecological compatibility between the functional safety partition and the kernel.

### (2) Page fault processing process

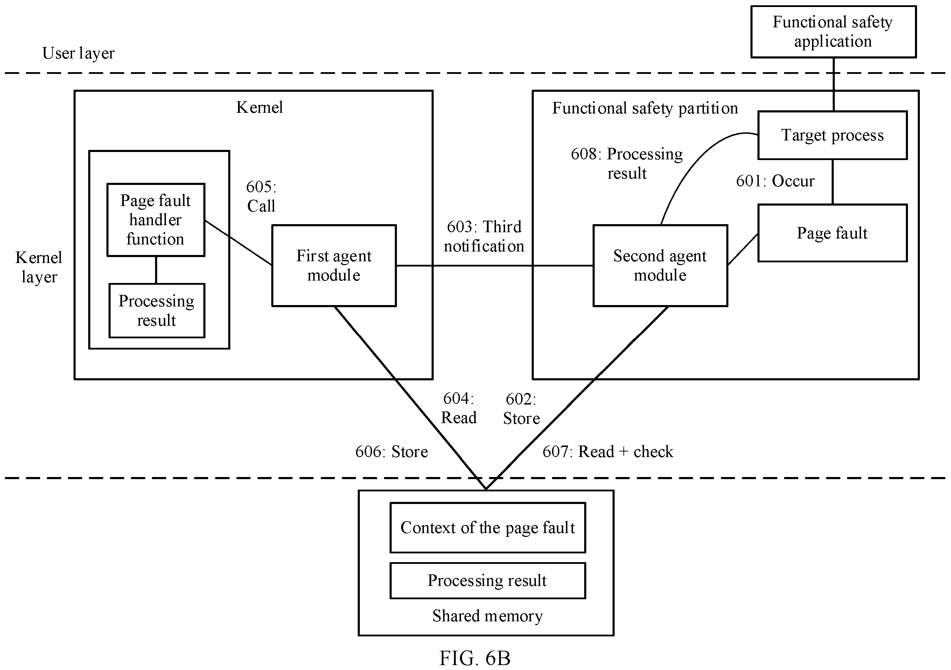

The page fault processing process may be understood with reference to FIG. 6B. As shown in FIG. 6B, the process may include the following steps.

601: A page fault occurs when the second agent module runs the target process in the functional safety partition. 602: The second agent module stores a context of the page fault in the shared memory from the functional safety partition.

This step may be storing the context of the page fault in the shared memory by using the second agent module.

603: The second agent module sends a third notification from the functional safety partition to the kernel, where the third notification is used to indicate that a page fault occurs.

The second notification may be sent to the first agent module by using the second agent module.

604: The first agent module reads the context of the page fault from the shared memory.

605: The first agent module calls a page fault processing function in the kernel based on the context of the page fault, and performs page fault processing based on the page fault processing function, to obtain a processing result.

This step includes: The first agent module executes the page fault processing function to allocate a physical page to the target process, and configures a page table of the physical page; triggers the virtual machine manager to establish a mapping relationship between the virtual address and a third physical address, where the third physical address is obtained after an address of the physical page is added to the first physical address; and modifies a page table permission value of the target process based on the page table of the physical page, where the page table permission value is used to indicate a range of page tables allowed to be used by the target process. This can ensure that the target process is run normally after a page fault occurs.

606: The first agent module writes the processing result to the shared memory.

607: The second agent module reads the processing result of the page fault from the shared memory, checks the processing result, and if the check succeeds, returns the processing result to the target process for continuing execution. A check process in this step is the same as that in step 507, and details are not described herein again.

608: The second agent module uses the processing result to complete the page fault processing process of the functional safety partition.

In this embodiment, when a page fault occurs, the context of the page fault may be transferred between the functional safety partition and the kernel. In this way, a page fault of the functional safety partition can be implemented by using a page fault processing process of the kernel, so as to ensure ecological compatibility between the functional safety partition and the kernel.

In addition, in the foregoing embodiment, a consistency check may be further performed on the return value or the processing result, so as to further ensure data safety.

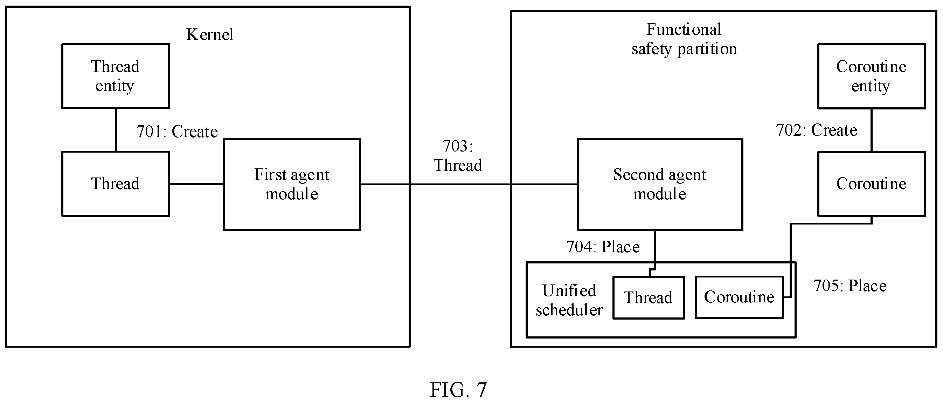

In addition, the target process in the foregoing embodiment may include a thread and a coroutine. In the solution provided in this embodiment of this application, the thread and the coroutine may be scheduled in a unified manner. The process may be understood with reference to FIG. 7. As shown in FIG. 7, the process may include the following steps.

701: A thread entity in the kernel creates a thread.

702: A coroutine entity in the functional safety partition creates a coroutine.

The coroutine is a microthread.

703: Transfer the thread from the kernel to the functional safety partition by using the first agent module and the second agent module.

704: Place the thread in a unified scheduler.

The functional safety partition includes the unified scheduler.

705: Place the coroutine in the unified scheduler.

The unified scheduler can schedule the thread and the coroutine in a unified manner.

In the conventional technology, a thread scheduler is used to schedule a thread, and a coroutine scheduler is used to schedule a coroutine. When a coroutine needs to be scheduled, the coroutine needs to be first switched to a thread in which the coroutine is located, and then the thread is switched to the coroutine for scheduling. Two-level switching needs to be performed, and overheads are relatively high. In addition, the kernel is heavily interfered with, and scheduling determinism cannot be ensured. However, in this possible implementation, through unified scheduling of the unified scheduler, two-level scheduling is avoided, and overheads are reduced. In addition, the unified scheduler is located in the functional safety partition, and is not interfered with, and scheduling determinism is ensured.

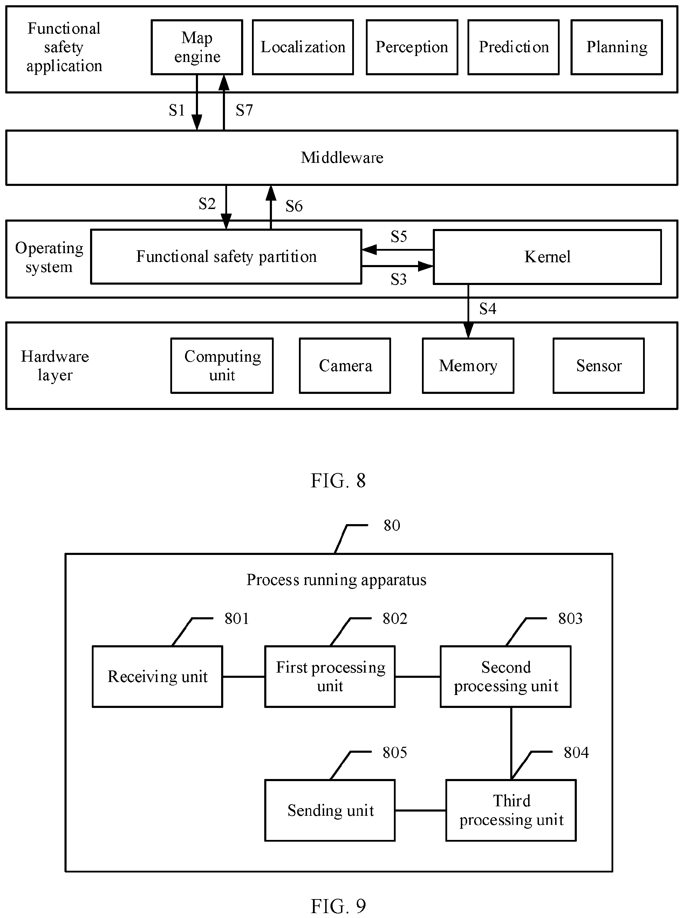

The foregoing plurality of embodiments in FIG. 3 to FIG. 7 describe a process from starting a process to running the process in the functional safety partition. The following further describes the process running method in embodiments of this application by using a map scenario in a self-driving vehicle-mounted platform shown in FIG. 8 as an example. As shown in FIG. 8, the self-driving vehicle-mounted platform includes a functional safety application, middleware, an operating system, and a hardware layer.

The functional safety application may include a map engine (map engine) application, a localization (localization) application, a perception (perception) application, a prediction (prediction) application, and a planning (planning) application.

The middleware includes corresponding configuration files for starting and running processes of various functional safety applications.

The operating system includes a kernel and a functional safety partition.

The hardware layer includes a computing unit (computer unit), a camera (camera), a memory (memory), and a sensor (sensor). The computing unit may be a processor, and the sensor may include a radar (lidar).

To implement a function of the map engine application, a process to be performed includes the following steps.

S 1: Read a map file in the middleware in response to a map loading request of the map engine application.

After a process of the map engine application is started, a localization event is monitored. When a localization event occurs, the map loading request is sent.

The localization event may be a global positioning system (global positioning system, GPS) event.

S2: The middleware processes the map loading request, loads the corresponding map file to the memory based on a GPS parameter, and triggers a mmap system call in the functional safety partition.

S3: The functional safety partition transfers a context of the mmap system call to the kernel by using an agent (for example, the second agent module in the foregoing embodiment) and a shared memory.

S4: The kernel processes a mmap system call request, and reads the map file in a read-only memory segment by using a file system.

S5: The kernel maps the map file to address space of the map engine application in the functional safety partition, and transfers a return value to the functional safety partition.

S6: The agent (for example, the second agent module in the foregoing embodiment) in the functional safety partition obtains a consistency check value based on a map path, calculates a consistency check value of the map file in the memory, and when finding, through comparison, that the two consistency check values are consistent, determines that the check succeeds, and transfers the return value to the middleware.

S7: After the system call processing is completed, the middleware sends a map reading success event, and the map engine performs a callback for reading.

In this scenario, an example in which a system call is performed for process running is used for description. Another related process running process (for example, a page fault) may also be understood with reference to the descriptions in the foregoing embodiment and the process in the scenario in FIG. 8.

On the whole, the application running apparatus may perform steps 201 to 204, steps 301 to 304, steps 401 to 406, steps 501 to 507, steps 601 to 607, steps 701 to 705, and the process from S1 to S7 in the foregoing scenario example. The physical resource of the kernel is isolated from the physical resource of the functional safety partition. Therefore, if the kernel is managed by a first processing apparatus, and the functional safety partition is managed by a second processing apparatus, from a perspective of the first processing apparatus and the second processing apparatus, steps 201 to 203 may be performed by the first processing apparatus, and step 204 is performed by the second processing apparatus. Steps 301, 302, 303, and 304 may be performed by the first processing apparatus. Steps 401 and 402 may be performed by the first processing apparatus, steps 403 and 404 may be performed by the second processing apparatus, and steps 405 and 406 may be performed by the first processing apparatus. Steps 501 and 502 may be performed by the second processing apparatus, steps 503, 504, and 505 may be performed by the first processing apparatus, and steps 506 and 507 may be performed by the second processing apparatus. Steps 601 and 602 may be performed by the second processing apparatus, steps 603, 604, 605, and 606 may be performed by the first processing apparatus, and step 607 may be performed by the second processing apparatus. Steps 701 and 703 may be performed by the first processing apparatus, and steps 702, 704, and 705 may be performed by the second processing apparatus. The first processing apparatus and the second processing apparatus are included in the terminal device.

The foregoing describes the process running method provided in embodiments of this application. The following describes the process running apparatus provided in embodiments of this application with reference to the accompanying drawings.

As shown in FIG. 9, an embodiment of a process running apparatus 80 provided in embodiments of this application includes a receiving unit 801, a first processing unit 802, a second processing unit 803, a third processing unit 804, and a sending unit 805.

The receiving unit 801 is configured to receive a process startup request, where the process startup request is used to indicate to start a target process.

The first processing unit 802 is configured to execute an executable file of the target process in a kernel based on the process startup request received by the receiving unit 801, to obtain first running function data that supports running of the target process in the kernel.

The second processing unit 803 is configured to migrate the first running function data obtained by the first processing unit 802 to a functional safety partition to obtain second running function data, where the functional safety partition and the kernel are located at a same privilege layer.

The third processing unit 804 is configured to run the target process in the functional safety partition based on the second running function data obtained by the second processing unit 803.

In the solution provided in this embodiment of this application, both the functional safety partition and the kernel are located at a kernel layer. In this way, during process running, a service at the kernel layer can be called without switching from a user layer to the kernel layer. This reduces performance overheads caused by privilege layer switching, and improves performance of a processor and a terminal device.

According to this application, the first running function data includes a virtual address of the target process, a mapping relationship between the virtual address and a first physical address, and a context of the target process, and the first physical address is a physical address allocated to the target process in a storage resource of the kernel; and the second running function data includes the virtual address of the target process, a mapping relationship between the virtual address and a second physical address, and the context of the target process, and the second physical address is a physical address allocated to the target process in a storage resource of the functional safety partition.

Optionally, the second processing unit 803 is configured to: trigger a virtual machine manager to migrate the virtual address to the functional safety partition, remove the mapping relationship between the virtual address and the first physical address, and establish the mapping relationship between the virtual address and the second physical address; and transfer the context of the target process to the functional safety partition by using a shared memory, where the shared memory is a memory shared by the kernel and the functional safety partition.

Optionally, the first processing unit 802 is further configured to: when executing the executable file of the target process in the kernel, create a first task structure in the kernel, where the first task structure is used to store the context of the target process; and add an indication value to the first task structure, where the indication value indicates that the target process needs to be run in the functional safety partition.

The sending unit 805 is configured to: when the target process is run, send a first notification from the kernel to the functional safety partition based on the indication value, where the first notification is used to indicate to create a second task structure in the functional safety partition.

The third processing unit 804 is configured to: create the second task structure based on the first notification, and store the context of the target process in the second task structure.

Optionally, the third processing unit 804 is further configured to: read the context of the target process from the shared memory to the functional safety partition; perform a consistency check on the context of the target process to obtain a first check value; and if the first check value is the same as a second check value, determine that the context of the target process is secure data, where the second check value is a trusted value obtained by performing a consistency check on an initial configuration context of the target process.

Optionally, the third processing unit 804 is configured to: if a system call instruction of the functional safety partition is called when the target process is run, store a context of the system call instruction in the shared memory from the functional safety partition.

The sending unit 805 is configured to send a second notification from the functional safety partition to the kernel, where the second notification is used to indicate that a system call occurs.

The second processing unit 803 is further configured to: read the context of the system call instruction from the shared memory, and call a system call instruction of the kernel based on the context of the system call instruction to perform a system call, to obtain a return value of the system call; and transfer the return value of the system call to the functional safety partition by using the shared memory.

Optionally, the third processing unit 804 is further configured to: read the return value of the system call from the shared memory to the functional safety partition; perform a consistency check on the return value of the system call to obtain a third check value; and if the third check value is the same as a fourth check value, determine that the return value of the system call is secure data, where the fourth check value is a trusted value obtained by performing a consistency check based on an original file corresponding to the system call.

Optionally, the third processing unit 804 is further configured to: if a page fault occurs when the target process is run, store a context of the page fault in the shared memory from the functional safety partition.

The sending unit 805 is configured to send a third notification from the functional safety partition to the kernel, where the third notification is used to indicate that a page fault occurs.

The second processing unit 803 is further configured to: read the context of the page fault from the shared memory, call a page fault processing function in the kernel based on the context of the page fault, and perform page fault processing based on the page fault processing function, to obtain a processing result; and transfer the processing result to the functional safety partition by using the shared memory.

It should be noted that the sending unit 805 may be a first sending unit, a second sending unit, or a third sending unit. The first processing unit 802, the second processing unit 803, and the third processing unit 804 may alternatively be implemented by one processing unit or two processing units. If the function running apparatus is a terminal device or a computer system in the terminal device, the first processing unit 802 and the second processing unit 803 may be included in a first processing apparatus. The first processing apparatus may be implemented by a processor or a processor core. The third processing unit 804 may be included in a second processing apparatus. The second processing apparatus may be implemented by another processor or processor core. The first processing apparatus and the second processing apparatus may have respective independent receiving units and sending units. In this way, it can be ensured that a computing resource of the kernel is isolated from a computing resource of the functional safety partition.

The process running apparatus 80 may be understood with reference to the foregoing embodiments of the process running method, and details are not described herein again.

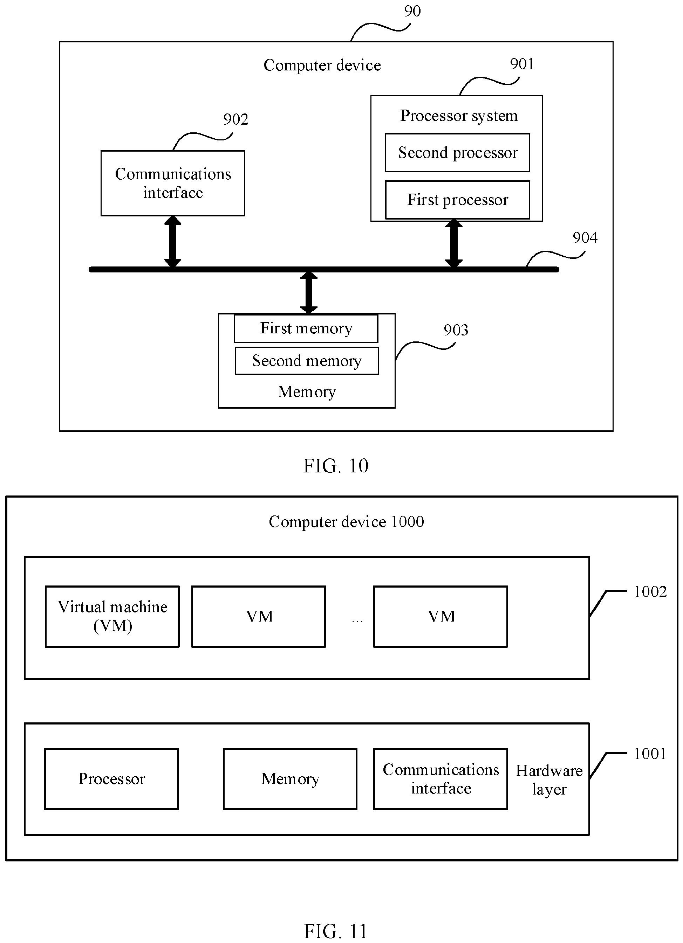

FIG. 10 is a schematic diagram of a possible logical structure of a computer device 90 according to an embodiment of this application. The computer device may be the terminal device described in the foregoing embodiments. The computer device 90 includes a processor system 901, a communications interface 902, a memory 903, and a bus 904. The processor system 901 may include a first processor and a second processor. The first processor corresponds to a kernel, and the second processor corresponds to a functional safety partition. If the processor system is a processor, the first processor is a processor core, and the second processor is another processor core. The memory 903 may include a first memory and a second memory. The first memory corresponds to a kernel, and the second memory corresponds to a functional safety partition. The processor system 901, the communications interface 902, and the memory 903 are connected to each other by using the bus 904. In this embodiment of this application, the processor system 901 is configured to control and manage an action of the computer device 90. For example, the processor system 901 is configured to perform steps 202 to 204 in FIG. 3, steps 301 to 304 in FIG. 4, steps 401 to 406 in FIG. 5, steps 501 to 507 in FIG. 6A, and steps 601 to 607 in FIG. 6B, and steps 701 to 705 in FIG. 7 and/or another process used for the technology described in this specification. Specific steps performed by the first processor and the second processor may be understood with reference to the foregoing steps performed by the first processing apparatus and the second processing apparatus. The communications interface 902 is configured to support the computer device 90 to perform communication. The memory 903 is configured to store program code and data of the computer device 90. The processor system 901 may be a central processing unit system, a general-purpose processor system, a digital signal processor system, an application-specific integrated circuit, a field-programmable gate array or another programmable logic device, a transistor logic device, a hardware component, or any combination thereof. The processor system may implement or execute various example logical blocks, modules, and circuits described with reference to content disclosed in this application. Alternatively, the processor system may be a combination of processor systems implementing a computing function, for example, a combination of one or more microprocessor systems, or a combination of a digital signal processor system and a microprocessor system. The bus 904 may be a peripheral component interconnect (Peripheral Component Interconnect, PCI) bus or an extended industry standard architecture (Extended Industry Standard Architecture, EISA) bus, or the like. Buses may be classified into an address bus, a data bus, a control bus, and the like. For ease of representation, only one thick line is used to represent the bus in FIG. 10, but this does not mean that there is only one bus or only one type of bus.

FIG. 11 is a schematic diagram of a possible logical structure of a computer device 1000 according to an embodiment of this application. The computer device may be the terminal device described in the foregoing embodiments. The computer device 1000 includes a hardware layer 1001 and a virtual machine (virtual machine, VM) layer 1002. The VM layer may include one or more VMs. The hardware layer 1001 provides a hardware resource for a VM, to support running of the VM. A function of the VM and a process related to this application may be understood with reference to the corresponding descriptions in FIG. 1 to FIG. 8. The hardware layer 1001 includes hardware resources such as a processor, a communications interface, and a memory.

Another embodiment of this application further provides a computer-readable storage medium. The computer-readable storage medium stores computer-executable instructions. When at least one processor of a device executes the computer-executable instructions, the device performs the process running method described in the embodiments in FIG. 1 to FIG. 8.

Another embodiment of this application further provides a computer program product. The computer program product includes computer-executable instructions, and the computer-executable instructions are stored in a computer-readable storage medium. At least one processor of a device may read the computer-executable instructions from the computer-readable storage medium. When the at least one processor executes the computer-executable instructions, the device performs the process running method described in the embodiments in FIG. 1 to FIG. 8.

Another embodiment of this application further provides a chip system. The chip system includes a processor, configured to support a process running apparatus to implement the process running method described in the embodiments in FIG. 1 to FIG. 8. In a possible design, the chip system may further include a memory. The memory is configured to store program instructions and data that are necessary for the process running apparatus. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

Aperson skilled in the art may clearly understand that, for the purpose of convenient and brief descriptions, for detailed working processes of the foregoing system, apparatus, and unit, refer to the corresponding processes in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A process running method, comprising:
receiving (201) a process startup request, wherein the process startup request is used to indicate to start a target process;
executing (202) an executable file of the target process in a kernel based on the process startup request, to obtain first running function data that supports running of the target process in the kernel, wherein executing the executable file of the target process in the kernel means executing a binary execution code of the executable file in an environment of the kernel, and wherein the first running function data comprises a virtual address of the target process, a mapping relationship between the virtual address and a first physical address, and a context of the target process, and the first physical address is a physical address allocated to the target process in a storage resource of the kernel;
migrating (203) the first running function data to a functional safety partition to obtain second running function data, wherein the functional safety partition and the kernel are located at a same privilege layer, wherein the second running function data comprises the virtual address of the target process, a mapping relationship between the virtual address and a second physical address, and the context of the target process, and the second physical address is a physical address allocated to the target process in a storage resource of the functional safety partition; and
running (204) the target process in the functional safety partition based on the second running function data.

2. The method according to claim 1, wherein the migrating (203) the first running function data to a functional safety partition to obtain second running function data comprises:
triggering a virtual machine manager to migrate the virtual address to the functional safety partition, removing (405) the mapping relationship between the virtual address and the first physical address, and establishing (406) the mapping relationship between the virtual address and the second physical address; and
transferring the context of the target process to the functional safety partition by using a shared memory, wherein the shared memory is a memory shared by the kernel and the functional safety partition.

3. The method according to claim 2, wherein the method further comprises:
when the executable file of the target process is executed (302) in the kernel, creating a first task structure in the kernel, wherein the first task structure is used to store the context of the target process;
adding (303) an indication value to the first task structure, wherein the indication value indicates that the target process needs to be run in the functional safety partition;
when the target process is run, sending (402) a first notification from the kernel to the functional safety partition based on the indication value, wherein the first notification is used to indicate to create a second task structure in the functional safety partition; and
creating (403) the second task structure based on the first notification, and storing the context of the target process in the second task structure.

4. The method according to claim 2 or 3, wherein the method further comprises:
reading (404) the context of the target process from the shared memory to the functional safety partition;
performing (404) a consistency check on the context of the target process to obtain a first check value; and
if the first check value is the same as a second check value, determining that the context of the target process is secure data, wherein the second check value is a trusted value obtained by performing a consistency check on an initial configuration context of the target process.

5. The method according to any one of claims 2 to 4, wherein the method further comprises:
if a system call instruction of the functional safety partition is called (501) when the target process is run, storing (502) a context of the system call instruction in the shared memory from the functional safety partition;
sending (503) a second notification from the functional safety partition to the kernel, wherein the second notification is used to indicate that a system call occurs;
reading (504) the context of the system call instruction from the shared memory, and calling (505) a system call instruction of the kernel based on the context of the system call instruction to perform a system call, to obtain a return value of the system call; and
transferring the return value of the system call to the functional safety partition by using the shared memory.

6. The method according to claim 5, wherein the method further comprises:
reading (507) the return value of the system call from the shared memory to the functional safety partition;
performing (507) a consistency check on the return value of the system call to obtain a third check value; and
if the third check value is the same as a fourth check value, determining that the return value of the system call is secure data, wherein the fourth check value is a trusted value obtained by performing a consistency check based on an original file corresponding to the system call.

7. The method according to any one of claims 2 to 5, wherein the method further comprises:
if a page fault occurs (601) when the target process is run, storing (602) a context of the page fault in the shared memory from the functional safety partition;
sending (603) a third notification from the functional safety partition to the kernel, wherein the third notification is used to indicate that a page fault occurs;
reading (604) the context of the page fault from the shared memory, calling (605) a page fault processing function in the kernel based on the context of the page fault, and performing page fault processing based on the page fault processing function, to obtain a processing result; and
transferring the processing result to the functional safety partition by using the shared memory.

8. The method according to any one of claims 1 to 7, wherein
the target process comprises a thread and a coroutine, the thread is created (701) in the kernel and is run in the functional safety partition, and the coroutine is created (702) in the functional safety partition and is run in the functional safety partition; and
the functional safety partition comprises a unified scheduler, and the unified scheduler is configured to schedule the thread and the coroutine in a unified manner.

9. A process running apparatus (80), comprising:
a receiving unit (801), configured to receive a process startup request, wherein the process startup request is used to indicate to start a target process;
a first processing unit (802), configured to execute an executable file of the target process in a kernel based on the process startup request received by the receiving unit (801), to obtain first running function data that supports running of the target process in the kernel, wherein that the first processing unit (802) is configured to execute the executable file of the target process in the kernel means that the first processing unit (802) is configured to execute a binary execution code of the executable file in an environment of the kernel, and wherein the first running function data comprises a virtual address of the target process, a mapping relationship between the virtual address and a first physical address, and a context of the target process, and the first physical address is a physical address allocated to the target process in a storage resource of the kernel;
a second processing unit (803), configured to migrate the first running function data obtained by the first processing unit (802) to a functional safety partition to obtain second running function data, wherein the functional safety partition and the kernel are located at a same privilege layer, wherein the second running function data comprises the virtual address of the target process, a mapping relationship between the virtual address and a second physical address, and the context of the target process, and the second physical address is a physical address allocated to the target process in a storage resource of the functional safety partition; and
a third processing unit (804), configured to run the target process in the functional safety partition based on the second running function data obtained by the second processing unit (803).

10. The apparatus (80) according to claim 9, wherein
the second processing unit (803) is configured to: trigger a virtual machine manager to migrate the virtual address to the functional safety partition, remove the mapping relationship between the virtual address and the first physical address, and establish the mapping relationship between the virtual address and the second physical address; and transfer the context of the target process to the functional safety partition by using a shared memory, wherein the shared memory is a memory shared by the kernel and the functional safety partition.

11. The apparatus (80) according to claim 10, wherein the apparatus (80) further comprises a first sending unit (805);
the first processing unit (802) is further configured to: when executing the executable file of the target process in the kernel, create a first task structure in the kernel, wherein the first task structure is used to store the context of the target process; and add an indication value to the first task structure, wherein the indication value indicates that the target process needs to be run in the functional safety partition;
the first sending unit (805) is configured to: when the target process is run, send a first notification from the kernel to the functional safety partition based on the indication value, wherein the first notification is used to indicate to create a second task structure in the functional safety partition; and
the third processing unit (804) is configured to: create the second task structure based on the first notification, and store the context of the target process in the second task structure.

12. The apparatus (80) according to claim 10 or 11, wherein
the third processing unit (804) is further configured to: read the context of the target process from the shared memory to the functional safety partition; perform a consistency check on the context of the target process to obtain a first check value; and if the first check value is the same as a second check value, determine that the context of the target process is secure data, wherein the second check value is a trusted value obtained by performing a consistency check on an initial configuration context of the target process.

13. The apparatus (80) according to any one of claims 10 to 12, wherein the apparatus (80) further comprises a second sending unit (805);
the third processing unit (804) is configured to: if a system call instruction of the functional safety partition is called when the target process is run, store a context of the system call instruction in the shared memory from the functional safety partition;
the second sending unit (805) is configured to send a second notification from the functional safety partition to the kernel, wherein the second notification is used to indicate that a system call occurs; and
the second processing unit (803) is further configured to: read the context of the system call instruction from the shared memory, and call a system call instruction of the kernel based on the context of the system call instruction to perform a system call, to obtain a return value of the system call; and transfer the return value of the system call to the functional safety partition by using the shared memory.

14. The apparatus (80) according to claim 13, wherein
the third processing unit (804) is further configured to: read the return value of the system call from the shared memory to the functional safety partition; perform a consistency check on the return value of the system call to obtain a third check value; and if the third check value is the same as a fourth check value, determine that the return value of the system call is secure data, wherein the fourth check value is a trusted value obtained by performing a consistency check based on an original file corresponding to the system call.

15. The apparatus (80) according to any one of claims 10 to 14, wherein the apparatus (80) further comprises a third sending unit (805);
the third processing unit (804) is further configured to: if a page fault occurs when the target process is run, store a context of the page fault in the shared memory from the functional safety partition;
the third sending unit (805) is configured to send a third notification from the functional safety partition to the kernel, wherein the third notification is used to indicate that a page fault occurs; and
the second processing unit (803) is further configured to: read the context of the page fault from the shared memory, call a page fault processing function in the kernel based on the context of the page fault, and perform page fault processing based on the page fault processing function, to obtain a processing result; and transfer the processing result to the functional safety partition by using the shared memory.

16. A computing device, comprising a processor and a computer-readable storage medium storing a computer program, wherein
the processor is coupled to the computer-readable storage medium, and when the computer program is executed by the processor, the method according to any one of claims 1 to 8 is implemented.

17. A computer-readable storage medium, wherein the computer-readable storage medium stores a computer program, and when the computer program is executed by a processor, the method according to any one of claims 1 to 8 is implemented.

18. A chip system, comprising a processor, wherein the processor is invoked to perform the method according to any one of claims 1 to 8.

## Patentansprüche

1. Prozessausführungsverfahren, umfassend:
Empfangen (201) einer Prozessstartanforderung, wobei die Prozessstartanforderung verwendet wird, um anzugeben, einen Zielprozess zu starten;
Ausführen (202) einer ausführbaren Datei des Zielprozesses in einem Kernel basierend auf der Prozessstartanforderung, um erste Ausführungsfunktionsdaten zu erlangen, die Ausführen des Zielprozesses in dem Kernel unterstützen, wobei das Ausführen der ausführbaren Datei des Zielprozesses in dem Kernel Ausführen eines binären Ausführungscodes der ausführbaren Datei in einer Umgebung des Kernels bedeutet und wobei die ersten Ausführungsfunktionsdaten eine virtuelle Adresse des Zielprozesses, eine Zuordnungsbeziehung zwischen der virtuellen Adresse und einer ersten physischen Adresse und einen Kontext des Zielprozesses umfassen und die erste physische Adresse eine physische Adresse ist, die dem Zielprozess in einer Speicherressource des Kernels zugewiesen ist;
Migrieren (203) der ersten Ausführungsfunktionsdaten zu einer Funktionssicherheitspartition, um zweite Ausführungsfunktionsdaten zu erlangen, wobei sich die Funktionssicherheitspartition und der Kernel auf derselben Berechtigungsebene befinden, wobei die zweiten Ausführungsfunktionsdaten die virtuelle Adresse des Zielprozesses, eine Zuordnungsbeziehung zwischen der virtuellen Adresse und einer zweiten physischen Adresse und den Kontext des Zielprozesses umfassen und die zweite physische Adresse eine physische Adresse ist, die dem Zielprozess in einer Speicherressource der Funktionssicherheitspartition zugewiesen ist; und
Ausführen (204) des Zielprozesses in der Funktionssicherheitspartition basierend auf den zweiten Ausführungsfunktionsdaten.

2. Verfahren nach Anspruch 1, wobei das Migrieren (203) der ersten Ausführungsfunktionsdaten zu einer Funktionssicherheitspartition, um zweite Ausführungsfunktionsdaten zu erlangen, Folgendes umfasst:
Auslösen eines Virtual Machine Managers, um die virtuelle Adresse zu der Funktionssicherheitspartition zu migrieren, Entfernen (405) der Zuordnungsbeziehung zwischen der virtuellen Adresse und der ersten physischen Adresse und Herstellen (406) der Zuordnungsbeziehung zwischen der virtuellen Adresse und der zweiten physischen Adresse; und
Übertragen des Kontexts des Zielprozesses an die Funktionssicherheitspartition unter Verwendung eines gemeinsam genutzten Speichers, wobei der gemeinsam genutzte Speicher ein Speicher ist, der durch den Kernel und die Funktionssicherheitspartition gemeinsam genutzt wird.

3. Verfahren nach Anspruch 2, wobei das Verfahren ferner Folgendes umfasst:
während die ausführbare Datei des Zielprozesses in dem Kernel ausgeführt (302) wird, Erstellen einer ersten Aufgabenstruktur in dem Kernel, wobei die erste Aufgabenstruktur verwendet wird, um den Kontext des Zielprozesses zu speichern;
Hinzufügen (303) eines Angabewerts zu der ersten Aufgabenstruktur, wobei der Angabewert angibt, dass der Zielprozess in der Funktionssicherheitspartition ausgeführt werden muss;
während der Zielprozess ausgeführt wird, Senden (402) einer ersten Benachrichtigung von dem Kernel an die Funktionssicherheitspartition basierend auf dem Angabewert, wobei die erste Benachrichtigung verwendet wird, um anzugeben, eine zweite Aufgabenstruktur in der Funktionssicherheitspartition zu erstellen; und
Erstellen (403) der zweiten Aufgabenstruktur basierend auf der ersten Benachrichtigung und Speichern des Kontexts des Zielprozesses in der zweiten Aufgabenstruktur.

4. Verfahren nach Anspruch 2 oder 3, wobei das Verfahren ferner Folgendes umfasst:
Lesen (404) des Kontexts des Zielprozesses aus dem gemeinsam genutzten Speicher in die Funktionssicherheitspartition;
Durchführen (404) einer Konsistenzprüfung des Kontexts des Zielprozesses, um einen ersten Prüfwert zu erlangen; und
wenn der erste Prüfwert derselbe wie ein zweiter Prüfwert ist, Bestimmen, dass es sich bei dem Kontext des Zielprozesses um sichere Daten handelt, wobei der zweite Prüfwert ein vertrauenswürdiger Wert ist, der durch Durchführen einer Konsistenzprüfung eines anfänglichen Konfigurationskontexts des Zielprozesses erlangt wird.

5. Verfahren nach einem der Ansprüche 2 bis 4, wobei das Verfahren ferner Folgendes umfasst:
wenn eine Systemaufrufanweisung der Funktionssicherheitspartition aufgerufen (501) wird, während der Zielprozess ausgeführt wird, Speichern (502) eines Kontexts der Systemaufrufanweisung in dem gemeinsam genutzten Speicher aus der Funktionssicherheitspartition;
Senden (503) einer zweiten Benachrichtigung von der Funktionssicherheitspartition an den Kernel, wobei die zweite Benachrichtigung verwendet wird, um anzugeben, dass ein Systemaufruf erfolgt;
Lesen (504) des Kontexts der Systemaufrufanweisung aus dem gemeinsam genutzten Speicher und Aufrufen (505) einer Systemaufrufanweisung des Kernels basierend auf dem Kontext der Systemaufrufanweisung, um einen Systemaufruf durchzuführen, um einen Rückgabewert des Systemaufrufs zu erlangen; und
Übertragen des Rückgabewerts des Systemaufrufs an die Funktionssicherheitspartition unter Verwendung des gemeinsam genutzten Speichers.

6. Verfahren nach Anspruch 5, wobei das Verfahren ferner Folgendes umfasst:
Lesen (507) des Rückgabewerts des Systemaufrufs aus dem gemeinsam genutzten Speicher in die Funktionssicherheitspartition;
Durchführen (507) einer Konsistenzprüfung des Rückgabewerts des Systemaufrufs, um einen dritten Prüfwert zu erlangen; und
wenn der dritte Prüfwert derselbe wie ein vierter Prüfwert ist, Bestimmen, dass es sich bei dem Rückgabewert des Systemaufrufs um sichere Daten handelt, wobei der vierte Prüfwert ein vertrauenswürdiger Wert ist, der durch Durchführen einer Konsistenzprüfung basierend auf einer Originaldatei, die dem Systemaufruf entspricht, erlangt wird.

7. Verfahren nach einem der Ansprüche 2 bis 5, wobei das Verfahren ferner Folgendes umfasst:
wenn ein Seitenfehler auftritt (601), während der Zielprozess ausgeführt wird, Speichern (602) eines Kontexts des Seitenfehlers in dem gemeinsam genutzten Speicher aus der Funktionssicherheitspartition;
Senden (603) einer dritten Benachrichtigung von der Funktionssicherheitspartition an den Kernel, wobei die dritte Benachrichtigung verwendet wird, um anzugeben, dass ein Seitenfehler auftritt;
Lesen (604) des Kontexts des Seitenfehlers aus dem gemeinsam genutzten Speicher, Aufrufen (605) einer Seitenfehlerverarbeitungsfunktion in dem Kernel basierend auf dem Kontext des Seitenfehlers und Durchführen einer Seitenfehlerverarbeitung basierend auf der Seitenfehlerverarbeitungsfunktion, um ein Verarbeitungsergebnis zu erlangen; und
Übertragen des Verarbeitungsergebnisses an die Funktionssicherheitspartition unter Verwendung des gemeinsam genutzten Speichers.

8. Verfahren nach einem der Ansprüche 1 bis 7, wobei der Zielprozess einen Thread und eine Coroutine umfasst, der Thread in dem Kernel erstellt (701) wird und in der Funktionssicherheitspartition ausgeführt wird und die Coroutine in der Funktionssicherheitspartition erstellt (702) wird und in der Funktionssicherheitspartition ausgeführt wird; und
die Funktionssicherheitspartition einen einheitlichen Planer umfasst und der einheitliche Planer dazu konfiguriert ist, den Thread und die Coroutine auf einheitliche Weise zu planen.

9. Prozessausführungsvorrichtung (80), umfassend:
eine Empfangseinheit (801), die dazu konfiguriert ist, eine Prozessstartanforderung zu empfangen, wobei die Prozessstartanforderung verwendet wird, um anzugeben, einen Zielprozess zu starten;
eine erste Verarbeitungseinheit (802), die dazu konfiguriert ist, eine ausführbare Datei des Zielprozesses in einem Kernel basierend auf der Prozessstartanforderung, die durch die Empfangseinheit (801) empfangen wurde, auszuführen, um erste Ausführungsfunktionsdaten zu erlangen, die Ausführen des Zielprozesses in dem Kernel unterstützen, wobei dass die erste Verarbeitungseinheit (802) dazu konfiguriert ist, die ausführbare Datei des Zielprozesses in dem Kernel auszuführen, bedeutet, dass die erste Verarbeitungseinheit (802) dazu konfiguriert ist, einen binären Ausführungscode der ausführbaren Datei in einer Umgebung des Kernels auszuführen, und wobei die ersten Ausführungsfunktionsdaten eine virtuelle Adresse des Zielprozesses, eine Zuordnungsbeziehung zwischen der virtuellen Adresse und einer ersten physischen Adresse und einen Kontext des Zielprozesses umfassen und die erste physische Adresse eine physische Adresse ist, die dem Zielprozess in einer Speicherressource des Kernels zugewiesen ist;
eine zweite Verarbeitungseinheit (803), die dazu konfiguriert ist, die ersten Ausführungsfunktionsdaten, die durch die erste Verarbeitungseinheit (802) erlangt wurden, zu einer Funktionssicherheitspartition zu migrieren, um zweite Ausführungsfunktionsdaten zu erlangen, wobei sich die Funktionssicherheitspartition und der Kernel auf derselben Berechtigungsebene befinden, wobei die zweiten Ausführungsfunktionsdaten die virtuelle Adresse des Zielprozesses, eine Zuordnungsbeziehung zwischen der virtuellen Adresse und einer zweiten physischen Adresse und den Kontext des Zielprozesses umfassen und die zweite physische Adresse eine physische Adresse ist, die dem Zielprozess in einer Speicherressource der Funktionssicherheitspartition zugewiesen ist; und
eine dritte Verarbeitungseinheit (804), die dazu konfiguriert ist, den Zielprozess in der Funktionssicherheitspartition basierend auf den zweiten Ausführungsfunktionsdaten, die durch die zweite Verarbeitungseinheit (803) erlangt wurden, auszuführen.

10. Vorrichtung (80) nach Anspruch 9, wobei
die zweite Verarbeitungseinheit (803) zu Folgendem konfiguriert ist: Auslösen eines Virtual Machine Managers, um die virtuelle Adresse zu der Funktionssicherheitspartition zu migrieren, Entfernen der Zuordnungsbeziehung zwischen der virtuellen Adresse und der ersten physischen Adresse und Herstellen der Zuordnungsbeziehung zwischen der virtuellen Adresse und der zweiten physischen Adresse; und Übertragen des Kontexts des Zielprozesses an die Funktionssicherheitspartition unter Verwendung eines gemeinsam genutzten Speichers, wobei der gemeinsam genutzte Speicher ein Speicher ist, der durch den Kernel und die Funktionssicherheitspartition gemeinsam genutzt wird.

11. Vorrichtung (80) nach Anspruch 10, wobei die Vorrichtung (80) ferner eine erste Sendeeinheit (805) umfasst;
die erste Verarbeitungseinheit (802) ferner zu Folgendem konfiguriert ist: während die ausführbare Datei des Zielprozesses in dem Kernel ausgeführt wird, Erstellen einer ersten Aufgabenstruktur in dem Kernel, wobei die erste Aufgabenstruktur verwendet wird, um den Kontext des Zielprozesses zu speichern; und Hinzufügen eines Angabewerts zu der ersten Aufgabenstruktur, wobei der Angabewert angibt, dass der Zielprozess in der Funktionssicherheitspartition ausgeführt werden muss;
die erste Sendeeinheit (805) zu Folgendem konfiguriert ist:
während der Zielprozess ausgeführt wird, Senden einer ersten Benachrichtigung von dem Kernel an die Funktionssicherheitspartition basierend auf dem Angabewert, wobei die erste Benachrichtigung verwendet wird, um anzugeben, eine zweite Aufgabenstruktur in der Funktionssicherheitspartition zu erstellen; und
die dritte Verarbeitungseinheit (804) zu Folgendem konfiguriert ist: Erstellen der zweiten Aufgabenstruktur basierend auf der ersten Benachrichtigung und Speichern des Kontexts des Zielprozesses in der zweiten Aufgabenstruktur.

12. Vorrichtung (80) nach Anspruch 10 oder 11, wobei
die dritte Verarbeitungseinheit (804) ferner zu Folgendem konfiguriert ist: Lesen des Kontexts des Zielprozesses aus dem gemeinsam genutzten Speicher in die Funktionssicherheitspartition; Durchführen einer Konsistenzprüfung des Kontexts des Zielprozesses, um einen ersten Prüfwert zu erlangen; und, wenn der erste Prüfwert derselbe wie ein zweiter Prüfwert ist, Bestimmen, dass es sich bei dem Kontext des Zielprozesses um sichere Daten handelt, wobei der zweite Prüfwert ein vertrauenswürdiger Wert ist, der durch Durchführen einer Konsistenzprüfung eines anfänglichen Konfigurationskontexts des Zielprozesses erlangt wird.

13. Vorrichtung (80) nach einem der Ansprüche 10 bis 12, wobei die Vorrichtung (80) ferner eine zweite Sendeeinheit (805) umfasst;
die dritte Verarbeitungseinheit (804) zu Folgendem konfiguriert ist: wenn eine Systemaufrufanweisung der Funktionssicherheitspartition aufgerufen wird, während der Zielprozess ausgeführt wird, Speichern eines Kontexts der Systemaufrufanweisung in dem gemeinsam genutzten Speicher aus der Funktionssicherheitspartition;
die zweite Sendeeinheit (805) dazu konfiguriert ist, eine zweite Benachrichtigung von der Funktionssicherheitspartition an den Kernel zu senden, wobei die zweite Benachrichtigung verwendet wird, um anzugeben, dass ein Systemaufruf erfolgt; und
die zweite Verarbeitungseinheit (803) ferner zu Folgendem konfiguriert ist: Lesen des Kontexts der Systemaufrufanweisung aus dem gemeinsam genutzten Speicher und Aufrufen einer Systemaufrufanweisung des Kernels basierend auf dem Kontext der Systemaufrufanweisung, um einen Systemaufruf durchzuführen, um einen Rückgabewert des Systemaufrufs zu erlangen; und Übertragen des Rückgabewerts des Systemaufrufs an die Funktionssicherheitspartition unter Verwendung des gemeinsam genutzten Speichers.

14. Vorrichtung (80) nach Anspruch 13, wobei
die dritte Verarbeitungseinheit (804) ferner zu Folgendem konfiguriert ist: Lesen des Rückgabewerts des Systemaufrufs aus dem gemeinsam genutzten Speicher in die Funktionssicherheitspartition; Durchführen einer Konsistenzprüfung des Rückgabewerts des Systemaufrufs, um einen dritten Prüfwert zu erlangen; und, wenn der dritte Prüfwert derselbe wie ein vierter Prüfwert ist, Bestimmen, dass es sich bei dem Rückgabewert des Systemaufrufs um sichere Daten handelt, wobei der vierte Prüfwert ein vertrauenswürdiger Wert ist, der durch Durchführen einer Konsistenzprüfung basierend auf einer Originaldatei, die dem Systemaufruf entspricht, erlangt wird.

15. Vorrichtung (80) nach einem der Ansprüche 10 bis 14, wobei die Vorrichtung (80) ferner eine dritte Sendeeinheit (805) umfasst;
die dritte Verarbeitungseinheit (804) ferner zu Folgendem konfiguriert ist: wenn ein Seitenfehler auftritt, während der Zielprozess ausgeführt wird, Speichern eines Kontexts des Seitenfehlers in dem gemeinsam genutzten Speicher aus der Funktionssicherheitspartition;
die dritte Sendeeinheit (805) dazu konfiguriert ist, eine dritte Benachrichtigung von der Funktionssicherheitspartition an den Kernel zu senden, wobei die dritte Benachrichtigung verwendet wird, um anzugeben, dass ein Seitenfehler auftritt; und
die zweite Verarbeitungseinheit (803) ferner zu Folgendem konfiguriert ist: Lesen des Kontexts des Seitenfehlers aus dem gemeinsam genutzten Speicher, Aufrufen einer Seitenfehlerverarbeitungsfunktion in dem Kernel basierend auf dem Kontext des Seitenfehlers und Durchführen einer Seitenfehlerverarbeitung basierend auf der Seitenfehlerverarbeitungsfunktion, um ein Verarbeitungsergebnis zu erlangen; und Übertragen des Verarbeitungsergebnisses an die Funktionssicherheitspartition unter Verwendung des gemeinsam genutzten Speichers.

16. Recheneinrichtung, umfassend einen Prozessor und ein computerlesbares Speichermedium, das ein Computerprogramm speichert, wobei
der Prozessor an das computerlesbare Speichermedium gekoppelt ist und, während das Computerprogramm durch den Prozessor ausgeführt wird, das Verfahren nach einem der Ansprüche 1 bis 8 umgesetzt wird.

17. Computerlesbares Speichermedium, wobei das computerlesbare Speichermedium ein Computerprogramm speichert und, während das Computerprogramm durch einen Prozessor ausgeführt wird, das Verfahren nach einem der Ansprüche 1 bis 8 umgesetzt wird.

18. Chipsystem, umfassend einen Prozessor, wobei der Prozessor dazu aufgerufen wird, das Verfahren nach einem der Ansprüche 1 bis 8 durchzuführen.

## Revendications

1. Procédé d'exécution de processus, comprenant :
la réception (201) d'une demande de démarrage de processus, dans lequel la demande de démarrage de processus est utilisée pour indiquer de démarrer un processus cible ;
l'exécution (202) d'un fichier exécutable du processus cible dans un noyau sur la base de la demande de démarrage de processus, pour obtenir des premières données de fonction d'exécution qui prennent en charge l'exécution du processus cible dans le noyau, dans lequel l'exécution du fichier exécutable du processus cible dans le noyau signifie l'exécution d'un code d'exécution binaire du fichier exécutable dans un environnement du noyau, et dans lequel les premières données de fonction d'exécution comprennent une adresse virtuelle du processus cible, une relation de mappage entre l'adresse virtuelle et une première adresse physique, et un contexte du processus cible, et la première adresse physique est une adresse physique allouée au processus cible dans une ressource de stockage du noyau ;
la migration (203) des premières données de fonction d'exécution vers une partition de sécurité fonctionnelle pour obtenir des secondes données de fonction d'exécution, dans lequel la partition de sécurité fonctionnelle et le noyau sont situés sur une même couche de privilèges, dans lequel les secondes données de fonction d'exécution comprennent l'adresse virtuelle du processus cible, une relation de mappage entre l'adresse virtuelle et une seconde adresse physique, et le contexte du processus cible, et la seconde adresse physique est une adresse physique allouée au processus cible dans une ressource de stockage de la partition de sécurité fonctionnelle ; et
l'exécution (204) du processus cible dans la partition de sécurité fonctionnelle sur la base des secondes données de fonction d'exécution.

2. Procédé selon la revendication 1, dans lequel la migration (203) des premières données de fonction d'exécution vers une partition de sécurité fonctionnelle pour obtenir des secondes données de fonction d'exécution comprend :
le déclenchement d'un gestionnaire de machine virtuelle pour migrer l'adresse virtuelle vers la partition de sécurité fonctionnelle, la suppression (405) de la relation de mappage entre l'adresse virtuelle et la première adresse physique, et l'établissement (406) de la relation de mappage entre l'adresse virtuelle et la seconde adresse physique ; et
le transfert du contexte du processus cible à la partition de sécurité fonctionnelle à l'aide d'une mémoire partagée, dans lequel la mémoire partagée est une mémoire partagée par le noyau et la partition de sécurité fonctionnelle.

3. Procédé selon la revendication 2, dans lequel le procédé comprend également :
lorsque le fichier exécutable du processus cible est exécuté (302) dans le noyau, la création d'une première structure de tâche dans le noyau, dans lequel la première structure de tâche est utilisée pour stocker le contexte du processus cible ;
l'ajout (303) d'une valeur d'indication à la première structure de tâche, dans lequel la valeur d'indication indique que le processus cible doit être exécuté dans la partition de sécurité fonctionnelle ;
lorsque le processus cible est exécuté, l'envoi (402) d'une première notification du noyau à la partition de sécurité fonctionnelle sur la base de la valeur d'indication, dans lequel la première notification est utilisée pour indiquer de créer une seconde structure de tâche dans la partition de sécurité fonctionnelle ; et
la création (403) de la seconde structure de tâche sur la base de la première notification, et le stockage du contexte du processus cible dans la seconde structure de tâche.

4. Procédé selon la revendication 2 ou 3, dans lequel le procédé comprend également :
la lecture (404) du contexte du processus cible de la mémoire partagée vers la partition de sécurité fonctionnelle ;
la réalisation (404) d'une vérification de cohérence sur le contexte du processus cible pour obtenir une première valeur de vérification ; et
si la première valeur de vérification est la même qu'une deuxième valeur de vérification, la détermination du fait que le contexte du processus cible constitue des données sécurisées, dans lequel la deuxième valeur de vérification est une valeur fiable obtenue en réalisant une vérification de cohérence sur un contexte de configuration initial du processus cible.

5. Procédé selon l'une quelconque des revendications 2 à 4, dans lequel le procédé comprend également :
si une instruction d'appel système de la partition de sécurité fonctionnelle est appelée (501) lorsque le processus cible est exécuté, le stockage (502) d'un contexte de l'instruction d'appel système dans la mémoire partagée à partir de la partition de sécurité fonctionnelle ;
l'envoi (503) d'une deuxième notification à partir de la partition de sécurité fonctionnelle vers le noyau, dans lequel la deuxième notification est utilisée pour indiquer qu'un appel système se produit ;
la lecture (504) du contexte de l'instruction d'appel système à partir de la mémoire partagée, et l'appel (505) d'une instruction d'appel système du noyau sur la base du contexte de l'instruction d'appel système pour réaliser un appel système, afin d'obtenir une valeur de retour de l'appel système ; et
le transfert de la valeur de retour de l'appel système vers la partition de sécurité fonctionnelle à l'aide de la mémoire partagée.

6. Procédé selon la revendication 5, dans lequel le procédé comprend également :
la lecture (507) de la valeur de retour de l'appel système de la mémoire partagée vers la partition de sécurité fonctionnelle ;
la réalisation (507) d'une vérification de cohérence sur la valeur de retour de l'appel système pour obtenir une troisième valeur de vérification ; et
si la troisième valeur de vérification est la même qu'une quatrième valeur de vérification, la détermination du fait que la valeur de retour de l'appel système constitue des données sécurisées, dans lequel la quatrième valeur de vérification est une valeur fiable obtenue en réalisant une vérification de cohérence sur la base d'un fichier d'origine correspondant à l'appel système.

7. Procédé selon l'une quelconque des revendications 2 à 5, dans lequel le procédé comprend également :
si un défaut de page se produit (601) lorsque le processus cible est exécuté, le stockage (602) d'un contexte du défaut de page dans la mémoire partagée à partir de la partition de sécurité fonctionnelle ;
l'envoi (603) d'une troisième notification à partir de la partition de sécurité fonctionnelle vers le noyau, dans lequel la troisième notification est utilisée pour indiquer qu'un défaut de page se produit ;
la lecture (604) du contexte du défaut de page à partir de la mémoire partagée, l'appel (605) d'une fonction de traitement de défaut de page dans le noyau sur la base du contexte du défaut de page, et la réalisation d'un traitement de défaut de page sur la base de la fonction de traitement de défaut de page, pour obtenir un résultat de traitement ; et
le transfert du résultat de traitement vers la partition de sécurité fonctionnelle à l'aide de la mémoire partagée.

8. Procédé selon l'une quelconque des revendications 1 à 7, dans lequel
le processus cible comprend un thread et une coroutine, le thread est créé (701) dans le noyau et est exécuté dans la partition de sécurité fonctionnelle, et la coroutine est créée (702) dans la partition de sécurité fonctionnelle et est exécutée dans la partition de sécurité fonctionnelle ; et
la partition de sécurité fonctionnelle comprend un planificateur unifié, et le planificateur unifié est configuré pour planifier le thread et la coroutine de manière unifiée.

9. Appareil d'exécution de processus (80), comprenant :
une unité de réception (801), configurée pour recevoir une demande de démarrage de processus, dans lequel la demande de démarrage de processus est utilisée pour indiquer de démarrer un processus cible ;
une première unité de traitement (802), configurée pour exécuter un fichier exécutable du processus cible dans un noyau sur la base de la demande de démarrage de processus reçue par l'unité de réception (801), pour obtenir des premières données de fonction d'exécution qui prennent en charge l'exécution du processus cible dans le noyau, dans lequel la première unité de traitement (802) est configurée pour exécuter le fichier exécutable du processus cible dans le noyau signifie que la première unité de traitement (802) est configurée pour exécuter un code d'exécution binaire du fichier exécutable dans un environnement du noyau, et dans lequel les premières données de fonction d'exécution comprennent une adresse virtuelle du processus cible, une relation de mappage entre l'adresse virtuelle et une première adresse physique, et un contexte du processus cible, et la première adresse physique est une adresse physique allouée au processus cible dans une ressource de stockage du noyau ;
une deuxième unité de traitement (803), configurée pour migrer les premières données de fonction d'exécution obtenues par la première unité de traitement (802) vers une partition de sécurité fonctionnelle pour obtenir des secondes données de fonction d'exécution, dans lequel la partition de sécurité fonctionnelle et le noyau sont situés sur une même couche de privilèges, dans lequel les secondes données de fonction d'exécution comprennent l'adresse virtuelle du processus cible, une relation de mappage entre l'adresse virtuelle et une seconde adresse physique, et le contexte du processus cible, et la seconde adresse physique est une adresse physique allouée au processus cible dans une ressource de stockage de la partition de sécurité fonctionnelle ; et
une troisième unité de traitement (804), configurée pour exécuter le processus cible dans la partition de sécurité fonctionnelle sur la base des secondes données de fonction d'exécution obtenues par la deuxième unité de traitement (803).

10. Appareil (80) selon la revendication 9, dans lequel la deuxième unité de traitement (803) est configurée pour :
déclencher un gestionnaire de machine virtuelle pour migrer l'adresse virtuelle vers la partition de sécurité fonctionnelle, supprimer la relation de mappage entre l'adresse virtuelle et la première adresse physique, et établir la relation de mappage entre l'adresse virtuelle et la seconde adresse physique ; et
transférer le contexte du processus cible vers la partition de sécurité fonctionnelle à l'aide d'une mémoire partagée, dans lequel la mémoire partagée est une mémoire partagée par le noyau et la partition de sécurité fonctionnelle.

11. Appareil (80) selon la revendication 10, dans lequel l'appareil (80) comprend également une première unité d'envoi (805) ;
la première unité de traitement (802) est également configurée pour : lors de l'exécution du fichier exécutable du processus cible dans le noyau, créer une première structure de tâche dans le noyau, dans lequel la première structure de tâche est utilisée pour stocker le contexte du processus cible ; et ajouter une valeur d'indication à la première structure de tâche, dans lequel la valeur d'indication indique que le processus cible doit être exécuté dans la partition de sécurité fonctionnelle ;
la première unité d'envoi (805) est configurée pour : lorsque le processus cible est exécuté, envoyer une première notification du noyau à la partition de sécurité fonctionnelle sur la base de la valeur d'indication, dans lequel la première notification est utilisée pour indiquer de créer une seconde structure de tâche dans la partition de sécurité fonctionnelle ; et
la troisième unité de traitement (804) est configurée pour : créer la seconde structure de tâche sur la base de la première notification, et stocker le contexte du processus cible dans la seconde structure de tâche.

12. Appareil (80) selon la revendication 10 ou 11, dans lequel la troisième unité de traitement (804) est également configurée pour : lire le contexte du processus cible à partir de la mémoire partagée vers la partition de sécurité fonctionnelle ; réaliser une vérification de cohérence sur le contexte du processus cible pour obtenir une première valeur de vérification ; et si la première valeur de vérification est la même qu'une deuxième valeur de vérification, déterminer le fait que le contexte du processus cible constitue des données sécurisées, dans lequel la deuxième valeur de vérification est une valeur fiable obtenue en réalisant une vérification de cohérence sur un contexte de configuration initial du processus cible.

13. Appareil (80) selon l'une quelconque des revendications 10 à 12, dans lequel l'appareil (80) comprend également une deuxième unité d'envoi (805) ;
la troisième unité de traitement (804) est configurée pour : si une instruction d'appel système de la partition de sécurité fonctionnelle est appelée lorsque le processus cible est exécuté, stocker un contexte de l'instruction d'appel système dans la mémoire partagée à partir de la partition de sécurité fonctionnelle ;
la deuxième unité d'envoi (805) est configurée pour envoyer une deuxième notification à partir de la partition de sécurité fonctionnelle vers le noyau, dans lequel la deuxième notification est utilisée pour indiquer qu'un appel système se produit ; et
la deuxième unité de traitement (803) est également configurée pour : lire le contexte de l'instruction d'appel système à partir de la mémoire partagée, et appeler une instruction d'appel système du noyau sur la base du contexte de l'instruction d'appel système pour réaliser un appel système, pour obtenir une valeur de retour de l'appel système ; et transférer la valeur de retour de l'appel système à la partition de sécurité fonctionnelle à l'aide de la mémoire partagée.

14. Appareil (80) selon la revendication 13, dans lequel la troisième unité de traitement (804) est également configurée pour : lire la valeur de retour de l'appel système à partir de la mémoire partagée vers la partition de sécurité fonctionnelle ; réaliser une vérification de cohérence sur la valeur de retour de l'appel système pour obtenir une troisième valeur de vérification ; et si la troisième valeur de vérification est la même qu'une quatrième valeur de vérification, déterminer le fait que la valeur de retour de l'appel système constitue des données sécurisées, dans lequel la quatrième valeur de vérification est une valeur fiable obtenue en réalisant une vérification de cohérence sur la base d'un fichier d'origine correspondant à l'appel système.

15. Appareil (80) selon l'une quelconque des revendications 10 à 14, dans lequel l'appareil (80) comprend également une troisième unité d'envoi (805) ;
la troisième unité de traitement (804) est également configurée pour : si un défaut de page se produit lorsque le processus cible est exécuté, stocker un contexte du défaut de page dans la mémoire partagée à partir de la partition de sécurité fonctionnelle ;
la troisième unité d'envoi (805) est configurée pour envoyer une troisième notification à partir de la partition de sécurité fonctionnelle vers le noyau, dans lequel la troisième notification est utilisée pour indiquer qu'un défaut de page se produit ; et
la deuxième unité de traitement (803) est également configurée pour : lire le contexte du défaut de page à partir de la mémoire partagée, appeler une fonction de traitement de défaut de page dans le noyau sur la base du contexte du défaut de page, et réaliser un traitement de défaut de page sur la base de la fonction de traitement de défaut de page, pour obtenir un résultat de traitement ; et transférer le résultat de traitement à la partition de sécurité fonctionnelle à l'aide de la mémoire partagée.

16. Dispositif informatique, comprenant un processeur et un support de stockage lisible par ordinateur stockant un programme informatique, dans lequel
le processeur est couplé au support de stockage lisible par ordinateur, et lorsque le programme informatique est exécuté par le processeur, le procédé selon l'une quelconque des revendications 1 à 8 est mis en oeuvre.

17. Support de stockage lisible par ordinateur, dans lequel le support de stockage lisible par ordinateur stocke un programme informatique, et lorsque le programme informatique est exécuté par un processeur, le procédé selon l'une quelconque des revendications 1 à 8 est mis en oeuvre.

18. Système de puce, comprenant un processeur, dans lequel le processeur est appelé à réaliser le procédé selon l'une quelconque des revendications 1 à 8.
